# FASCICULE DE BREVET EUROPEEN

(11) **EP 2 165 882 B1**
(45) Date de publication et mention de la délivrance du brevet: **28.03.2018**
(21) Numéro de dépôt: 09170511.1
(22) Date de dépôt: 17.09.2009
(51) Int. Cl.: B60Q 1/14, G06K 9/00

(54) **Procédé d'ajustement de l'éclairage des projecteurs pour véhicule automobile**
Regulierungsverfahren der Leuchtstärke von Kraftfahrzeugscheinwerfern
Method for adjusting the lighting of an automobile's headlights

(30) Priorité: 23.09.2008 FR 0805237
(43) Date de publication de la demande: 24.03.2010
(73) Titulaire: VALEO VISION, 93012 Bobigny (FR)
(72) Inventeur: Charpentier, Adrien, 70180, STUTTGART (DE)
(74) Mandataire: Claassen, Maarten Pieter

(56) Documents cités:
- EP-A- 1 339 228
- EP-A- 1 837 803
- WO-A-2008/024639
- DE-A1-102007 018 599
- US-A1- 2005 152 581
- US-A1- 2008 169 912
- US-B1- 6 611 610

## Description

La présente invention concerne un procédé d'ajustement de l'éclairage de projecteurs pour véhicule automobile, et un dispositif d'ajustement permettant de mettre en oeuvre ledit procédé.

Elle trouve une application particulière dans le domaine des véhicules automobiles.

Dans le domaine des véhicules automobiles, un état de la technique antérieur connu de procédé d'ajustement de l'éclairage de projecteurs pour véhicule automobile utilise une détection fonction de la vitesse du véhicule. Selon la vitesse du véhicule, le procédé adapte les projecteurs du véhicule en conséquence, en position code (feux de croisement) ou route (plein phare). Ainsi, par exemple, en dessous de 50km/h, le procédé considère que le véhicule est dans un environnement éclairé, tandis qu'au dessus, il considère qu'il est dans un environnement non éclairé.

Un inconvénient de cet état de la technique antérieur est que dans certains cas, les projecteurs sont mal adaptés à la situation que rencontre le véhicule. En effet, par exemple, en pleine agglomération si la vitesse du véhicule est rapide, le procédé d'ajustement va positionner les projecteurs en position route, alors qu'ils devraient être en position code. Dans un autre exemple, en forêt, si le véhicule rencontre un dos d'âne, il va freiner, et le procédé d'ajustement va positionner les projecteurs en position code, alors qu'ils devraient être en position route.

Un autre état de la technique antérieur est représenté par le document US 2005/152581 A1.

La présente invention a pour but un procédé d'ajustement de l'éclairage de projecteurs de véhicule automobile, qui permet d'éviter les inconvénients cités ci-dessus, et notamment qui permet de positionner les projecteurs du véhicule de façon adéquate par rapport à l'environnement du véhicule.

Selon un premier objet de l'invention, ce but est atteint par un procédé d'ajustement de l'éclairage de projecteurs pour véhicule selon la revendication 1. Comme on va le voir en détail par la suite, en mesurant le degré d'éclairement d'une image représentative de l'environnement du véhicule, cela permet de reconnaître plus sûrement si le véhicule se trouve dans un environnement éclairé ou non. L'ajustement du mode d'éclairage des projecteurs ne se fait plus à l'aveugle en fonction de la vitesse uniquement du véhicule, mais en prenant en compte l'environnement du véhicule.

Selon des modes de réalisation non limitatifs, le procédé présente en outre les caractéristiques suivantes:
- La détermination des zones éclairées comporte en outre une étape supplémentaire de supprimer de la première région d'intérêt une deuxième région d'intérêt représentative d'une zone éclairée par un faisceau lumineux des projecteurs du véhicule. Cela évite de confondre la zone éclairée par le faisceau lumineux des projecteurs du véhicule avec une zone éclairée de nuit par des objets éclairants.
- A chaque compteur est associé respectivement un critère de vérité qui est marqué vrai lorsque le compteur associé atteint un nombre de temporisation donné. On détermine ainsi si le véhicule se trouve probablement dans une zone éclairée ou non, ou de façon certaine dans une zone éclairée ou non.
- Lorsque la mesure du degré d'éclairement s'effectue selon plusieurs critères choisis parmi les critères suivant : un critère de niveau de détail des informations contenues dans la première région d'intérêt, ledit niveau de détail étant calculé en fonction de l'entropie de la première région d'intérêt, un critère d'amplitude de luminosité dans la première région d'intérêt, ladite amplitude se calculant en fonction de la valeur moyenne de la valeur des pixels de la première région d'intérêt, un critère de répartition de luminosité dans la première région d'intérêt, ladite répartition se calculant en fonction d'un nombre de pixels dans la première région d'intérêt dont la valeur est supérieure à un niveau de référence ;
   et lorsque l'état des projecteurs du véhicule est initialement en position code :
   - Si au moins deux critères de vérité associés d'une part à deux critères selon lesquels la mesure de degrés d'éclairement est effectuée et d'autre part correspondant à un état probable de zone éclairée ou à un état sûr de zone éclairée sont marqués vrais;
   - Ou si le véhicule comporte un angle au volant supérieur à un angle de référence ;
   - Ou si la vitesse du véhicule est inférieure à une première vitesse de référence et aucun des critères de vérité associés d'une part à deux critères selon lesquels la mesure de degrés d'éclairement est effectuée et correspondant d'autre part à un état sûr de zone non éclairée ne sont marqués vrais;
   - OU si la vitesse du véhicule est inférieure à une deuxième vitesse de référence ;
      - Alors le mode d'éclairage des projecteurs demeure en position code ;
      - Sinon, le mode d'éclairage des projecteurs est ajusté en position route.
- Lorsque la mesure du degré d'éclairement s'effectue selon plusieurs critères choisis parmi les critères suivant : un critère de niveau de détail des informations contenues dans la première région d'intérêt, ledit niveau de détail étant calculé en fonction de l'entropie de la première région d'intérêt, un critère d'amplitude de luminosité dans la première région d'intérêt, ladite amplitude se calculant en fonction de la valeur moyenne de la valeur des pixels de la première région d'intérêt, un critère de répartition de luminosité dans la première région d'intérêt, ladite répartition se calculant en fonction d'un nombre de pixels dans la première région d'intérêt dont la valeur est supérieure à un niveau de référence ;
   et lorsque l'état des projecteurs du véhicule est initialement en position route :
   - Si la vitesse du véhicule est supérieure à une première vitesse de référence ;
   - Si au moins deux critères de vérité associés d'une part à deux critères selon lesquels la mesure de degrés d'éclairement est effectuée et correspondant d'autre part à un état sûr de zone éclairée sont marqués vrais;
      - Alors le mode d'éclairage des projecteurs est ajusté en position code ;
   - Si la vitesse du véhicule est inférieure à la première vitesse de référence ;
   - Si au moins deux critères de vérité (PARAM) associés d'une part à deux critères selon lesquels la mesure de degrés d'éclairement est effectuée et correspondant d'autre part à un état probable de zone éclairée ou à un état sûr de zone éclairée sont marqués vrais;
      - Alors le mode d'éclairage des projecteurs est ajusté en position code ;
      - Sinon, le mode d'éclairage des projecteurs demeure en position route.
- Le procédé d'ajustement comporte en outre une étape supplémentaire de détection d'objets éclairants comportant les sous-étapes de :
   - Déterminer une troisième région d'intérêt dans une image acquise par une caméra vidéo du véhicule ;
   - Extraire des objets dans ladite troisième région d'intérêt, un objet extrait correspondant à une pluralité de pixels successifs ayant une valeur supérieure à un premier niveau de gris ;
   - Sélectionner les objets extraits qui ont une taille supérieure à une taille déterminée.

Ajouté à la détection de zones éclairées de nuit, cela permet d'accroître la fiabilité dans la reconnaissance d'un environnement éclairé ou non.
- La troisième région d'intérêt se situe au dessus de l'horizon dans l'image acquise. Cette région d'intérêt est suffisante pour détecter les lampadaires qui se situent toujours au dessus de l'horizon.
- Le procédé d'ajustement comporte en outre une étape supplémentaire de valider la sélection d'un objet en fonction de sa trajectoire déterminée dans une séquence d'images. Ce critère de trajectoire est un critère qui permet de fiabiliser la détection de l'éclairage de nuit tel que des lampadaires.
- La validation d'un objet sélectionné s'effectue en outre en fonction du nombre de fois où il apparaît dans une séquence d'images. Cela évite de retenir un objet éclairant qui ne serait pas un lampadaire, un lampadaire apparaissant en général plusieurs fois dans une séquence d'images au fur et à mesure que le véhicule roule.
- Une temporisation est déclenchée à la suite d'une validation. Cela permet de prendre en compte la distance qui peut exister entre deux lampadaires.
- La détermination du mode d'éclairage des projecteurs s'effectue en outre selon des objets validés, lesdits objets validés correspondant à des objets éclairants. La détermination du mode d'éclairage en fonction d'un objet éclairant tel qu'un lampadaire permet de résoudre le problème d'une mesure de luminosité non significative lorsqu'il n'y a rien à éclairer (mur, arbre, etc.) à part la route.
- Lorsque la mesure du degré d'éclairement s'effectue selon plusieurs critères choisis parmi les critères suivant : un critère de niveau de détail des informations contenues dans la première région d'intérêt, ledit niveau de détail étant calculé en fonction de l'entropie de la première région d'intérêt, un critère d'amplitude de luminosité dans la première région d'intérêt, ladite amplitude se calculant en fonction de la valeur moyenne de la valeur des pixels de la première région d'intérêt, un critère de répartition de luminosité dans la première région d'intérêt, ladite répartition se calculant en fonction d'un nombre de pixels dans la première région d'intérêt dont la valeur est supérieure à un niveau de référence; et lorsque l'état des projecteurs du véhicule est initialement en position code :
   - Si au moins un objet a été validé ;
   - Ou, si au moins deux critères de vérité associés d'une part à deux critères selon lesquels la mesure de degrés d'éclairement est effectuée et correspondant d'autre part à un état probable de zone éclairée ou à un état sûr de zone éclairée sont marqués vrais;
   - Ou si le véhicule comporte un angle au volant supérieur à un angle de référence ;
   - Ou si la vitesse du véhicule est inférieure à une première vitesse de référence et aucun des critères de vérité associés d'une part à deux critères selon lesquels la mesure de degrés d'éclairement est effectuée et correspondant d'autre part à un état sûr de zone non éclairée ne sont marqués vrais ;
   - OU si la vitesse du véhicule est inférieure à une deuxième vitesse de référence ;
      - Alors le mode d'éclairage des projecteurs demeure en position code ;
      - Sinon, le mode d'éclairage des projecteurs est ajusté en position route.
- Lorsque la mesure du degré d'éclairement s'effectue selon plusieurs critères choisis parmi les critères suivant : un critère de niveau de détail des informations contenues dans la première région d'intérêt, ledit niveau de détail étant calculé en fonction de l'entropie de la première région d'intérêt, un critère d'amplitude de luminosité dans la première région d'intérêt, ladite amplitude se calculant en fonction de la valeur moyenne de la valeur des pixels de la première région d'intérêt, un critère de répartition de luminosité dans la première région d'intérêt, ladite répartition se calculant en fonction d'un nombre de pixels dans la première région d'intérêt dont la valeur est supérieure à un niveau de référence ; et lorsque l'état des projecteurs du véhicule est initialement en position route :
   - Si la vitesse du véhicule est supérieure à une première vitesse de référence ;
      - Si au moins un objet a été validé ;
   - Ou si au moins deux critères de vérité associés d'une part à deux critères selon lesquels la mesure de degrés d'éclairement est effectuée et correspondant d'autre part à un état sûr de zone éclairée sont marqués vrais;
      - Alors le mode d'éclairage des projecteurs est ajusté en position code ;
   - Si la vitesse du véhicule est inférieure à la première vitesse de référence ;
      - Si au moins un objet a été validé ;
      - Ou si au moins deux critères de vérité associés d'une part à deux critères selon lesquels la mesure de degrés d'éclairement est effectuée et correspondant d'autre part à un état probable de zone éclairée ou à un état sûr de zone éclairée sont marqués vrais;
         - Alors le mode d'éclairage des projecteurs est ajusté en position code ;
         - Sinon, le mode d'éclairage des projecteurs demeure en position route.
- Des paramètres du véhicule sont :
   - un angle au volant ; et/ou
   - une vitesse ; et/ou
   - un angle d'assiette.

Les paramètres angle au volant et vitesse permettent d'éviter des commutations code-route intempestives et ainsi d'obtenir une stabilité.

L'angle d'assiette permet d'ajuster verticalement les régions d'intérêt déterminées.

Selon un deuxième objet de l'invention, elle concerne un dispositif d'ajustement de l'éclairage de projecteurs pour véhicule automobile, selon la revendication 14. Selon un mode de réalisation non limitatif, le dispositif d'ajustement comporte en outre la caractéristique selon laquelle l'unité de contrôle permet en outre de détecter des objets éclairants en :
- Déterminant une troisième région d'intérêt dans une image acquise par une caméra vidéo du véhicule ;
- Effectuant une extraction des objets dans ladite troisième région d'intérêt, un objet extrait correspondant à une pluralité de pixels successifs ayant une valeur supérieure à un premier niveau de gris ;
- Sélectionnant les objets extraits qui ont une taille supérieure à une taille déterminée.

D'autres caractéristiques et avantages de la présente invention seront mieux compris à l'aide de la description et des dessins non limitatifs parmi lesquels :
- la Fig. 1 représente un diagramme d'un mode de réalisation non limitatif du procédé d'ajustement selon l'invention ;
- la Fig. 2 représente une image utilisée dans une première étape de détermination d'une région d'intérêt selon le procédé d'ajustement de la Fig. 1 ;
- la Fig. 3 est un diagramme détaillant une étape de mesure d'un degré d'éclairement selon le procédé d'ajustement de la Fig. 1 ;
- la Fig. 4 est un premier diagramme montrant une valeur moyenne de pixels dans un image de la Fig. 2 permettant de mesurer le degré d'éclairement ;
- la Fig. 5 est un deuxième diagramme montrant un nombre de pixels dans une image de la Fig. 2 dont la valeur est supérieure à un seuil déterminé permettant de mesurer le degré d'éclairement ;
- la Fig. 6 est un troisième diagramme montrant une entropie dans un image de la Fig. 2 permettant de mesurer le degré d'éclairement ;

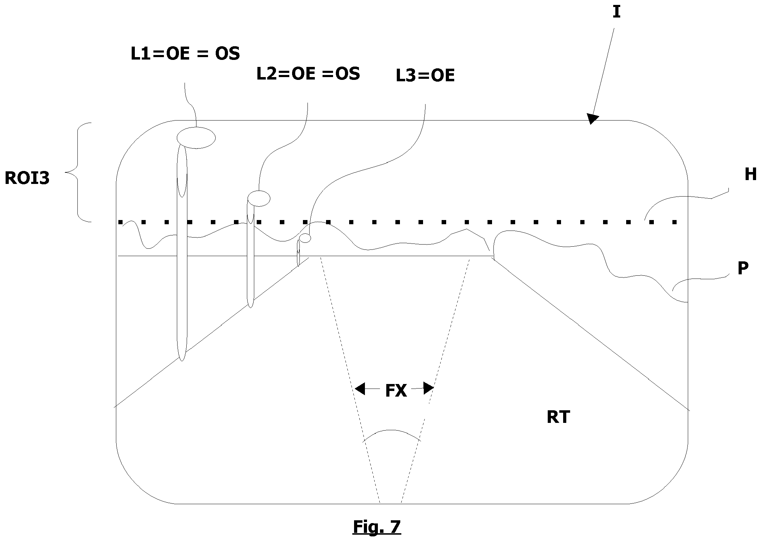

- la Fig. 7 représente une image utilisée dans une étape supplémentaire du procédé d'ajustement de la Fig. 1 dans laquelle une troisième région d'intérêt est déterminée ;
- la Fig. 8 est un premier organigramme détaillant une étape supplémentaire de stratégie d'ajustement des projecteurs du véhicule selon un premier mode de réalisation, selon le procédé d'ajustement de la Fig. 1 ;
- la Fig. 9 est un deuxième organigramme détaillant une étape supplémentaire de stratégie d'ajustement des projecteurs du véhicule selon un deuxième mode de réalisation, selon le procédé d'ajustement de la Fig. 1 ;
- la Fig. 10 est un troisième organigramme détaillant une étape supplémentaire de stratégie d'ajustement des projecteurs du véhicule selon un troisième mode de réalisation, selon le procédé d'ajustement de la Fig. 1 ; et
- la Fig. 11 illustre un mode de réalisation non limitatif d'un dispositif de mise en oeuvre du procédé de la Fig. 1.

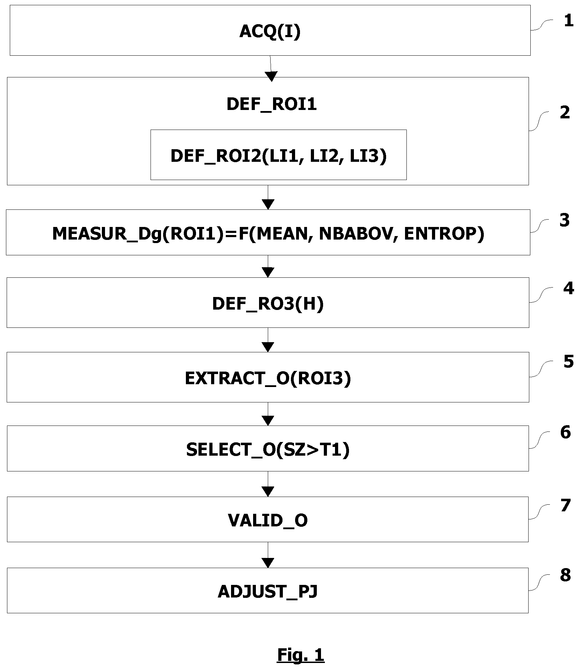

Le procédé d'ajustement de l'éclairage de projecteurs pour véhicule automobile, selon l'invention, est décrit dans un mode de réalisation non limitatif à la Fig. 1.

Par véhicule automobile, on entend tout véhicule comprenant un moteur.

Comme on va le voir ci-après, le procédé va permettre de détecter d'une part des zones éclairées de nuit de la route RT sur laquelle circule un véhicule automobile V, et d'autre part des objets éclairants représentatifs de l'éclairage public, tels que des lampadaires.

Ces deux détections vont permettre de déterminer si le véhicule V circule dans un environnement éclairé ou non (ville, hors ville, autoroute éclairée ou non etc.), et ainsi permettre l'ajustement des projecteurs PJ du véhicule en position route R_MOD (plein phare) ou position code C_MOD (feux de croisement).

### Détection de zones éclairées de nuit

Le procédé d'ajustement comporte les étapes suivantes telles qu'illustrées à la Fig 1:
- Déterminer une première région d'intérêt ROI1 dans une image acquise I par une caméra vidéo CAM du véhicule V (sous-étape DEF_ROI1) ; et
- Mesurer un degré d'éclairement Dg dans ladite première région d'intérêt ROI1 (étape MEASUR_Dg(ROI1) = F(MEAN, NBABOV,ENTROP)).

Dans un mode de réalisation non limitatif, cette détermination comporte en outre une étape supplémentaire de :
- supprimer de la première région d'intérêt ROI1 une deuxième région d'intérêt ROI2 représentative d'une zone éclairée par le faisceau lumineux FX des projecteurs PJ du véhicule V (étape DEL_ROI2(LI1, LI2, LI3)).

On notera enfin que dans un mode de réalisation non limitatif, le procédé comporte en outre une étape supplémentaire :
- D'acquisition d'images de l'environnement du véhicule V considéré par au moins une caméra vidéo CAM (étape ACQ(I)).

On notera que cette étape peut ne pas être comprise dans le procédé décrit, mais peut faire partie d'un autre procédé exécuté en amont du procédé décrit.

Pour la suite de la description, dans le mode de réalisation non limitatif décrit, le procédé comprend les étapes supplémentaires décrites ci-dessus.

Ces étapes sont décrites ci-après.

**Dans une première étape 1)**, on acquiert une séquence SQ d'images I par au moins une caméra vidéo CAM.

L'acquisition d'images I par une caméra CAM sur un véhicule V, étant connu de l'homme du métier, elle n'est pas décrite ici.

**Dans une deuxième étape 2),** on détermine une première région d'intérêt ROI1 dans une image acquise I par une caméra vidéo CAM du véhicule V.

Cette première région d'intérêt ROI1 est représentative des zones dans une image acquise I qui peuvent être éclairées par des lampadaires.

Cette détermination évite par la suite d'effectuer une détermination de zones éclairées sur toute une image. On gagne ainsi en temps de calcul.

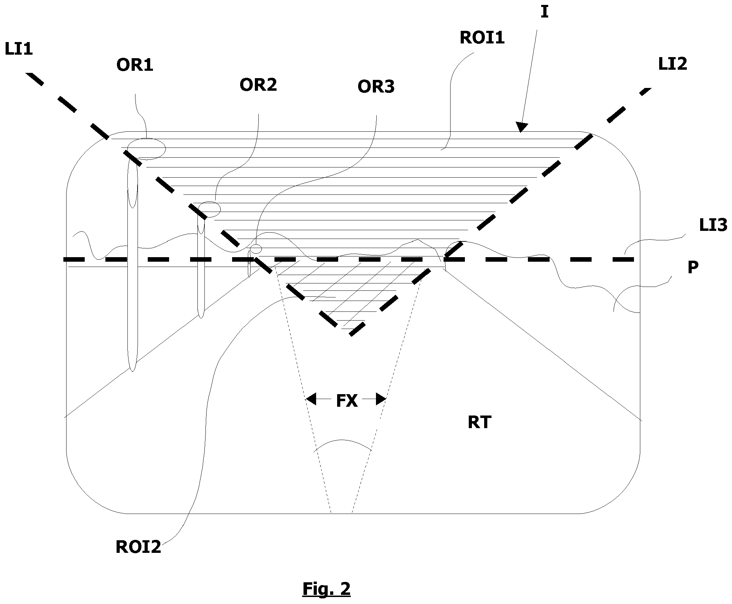

La première région d'intérêt ROI1 est déterminée par l'intersection de deux lignes LI1 et LI2 dans l'image acquise I tel qu'illustré à la Fig. 2.

La première et deuxième lignes LI1 et LI2 sont des lignes passant par des diagonales à l'image I qui se situent en dessous de lampadaires OR de référence lorsque la route RT est une ligne droite.

Ces deux lignes LI1 et LI2 déterminent une région en forme de triangle qui est la première région d'intérêt ROI1 telle qu'illustrée sur la Fig. 2 par des hachures horizontales.

Dans un mode de réalisation non limitatif, dans la première région d'intérêt ROI1, on supprime une deuxième région d'intérêt ROI2 représentative d'une zone éclairée par le faisceau lumineux FX des projecteurs PJ du véhicule V.

Dans un mode de réalisation non limitatif, la deuxième région d'intérêt ROI2 est déterminée par l'intersection des deux premières lignes LI1 et LI2 définies dans la sous-étape précédente avec une troisième ligne horizontale LI3. La troisième ligne LI3 est une ligne horizontale qui se situe au dessus de la partie supérieure du faisceau lumineux FX du véhicule V.

Ainsi, la deuxième région d'intérêt ROI2 est en forme de triangle et est illustrée sur la Fig. 2 par des hachures en diagonale.

Le fait d'enlever cette deuxième région d'intérêt ROI2 permet d'éviter de prendre en compte la zone éclairée par le faisceau lumineux FX des projecteurs PJ du véhicule, dans la détection des zones éclairées de nuit ZN.

En conséquence, la première région d'intérêt ROI1 n'est plus en forme de triangle, mais est en forme de trapèze.

**Dans une troisième étape 3),** on mesure un degré d'éclairement Dg dans la première région d'intérêt déterminée ROI1.

Comme on va le voir ci-après, la mesure du degré d'éclairement Dg va permettre de déterminer les zones éclairées de nuit, et selon un mode de réalisation non limitatif, la mesure du degré d'éclairement Dg va s'effectuer au moyen de trois paramètres :
- l'amplitude de l'éclairement dans la première région d'intérêt ROI1;
- le niveau de détail des informations contenues dans la première région d'intérêt ROI1 ; et
- la répartition de l'éclairement dans la première région d'intérêt ROI1.

Ces paramètres vont servir par la suite pour déterminer si le véhicule V se situe dans un environnement éclairé ou non et ainsi ajuster ses projecteurs PJ en conséquence.

Dans un mode de réalisation non limitatif, comme on va le voir ci-dessous, la détermination de chaque paramètre s'effectue sur une séquence d'images. Cela va permettre d'éviter des transitions intempestives entre un mode d'éclairage des projecteurs en position code et un autre en position route et vice et versa.

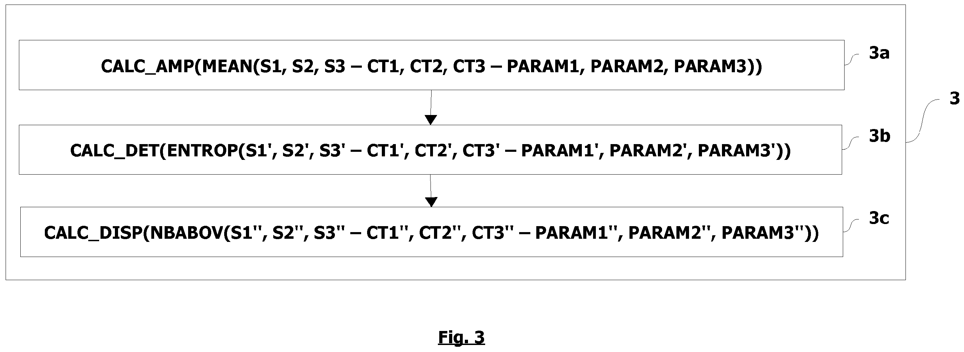

Les sous-étapes de cette troisième étape sont décrites à la Fig. 3.

**Dans une première sous-étape 3a),** on détermine l'amplitude de l'éclairement dans la première région d'intérêt ROI1 (sous-étape CALC_AMP(MEAN(S1, S2, S3 - CT1, CT2, CT3 - PARAM1, PARAM2, PARAM3))).

Cela donne une moyenne sur toute la première région d'intérêt ROI1.

A cet effet, dans un mode de réalisation non limitatif, on calcule la valeur moyenne MEAN de la valeur des pixels PX dans cette première région d'intérêt ROI1. La valeur moyenne MEAN est égale à la somme des valeurs des pixels PX divisée par le nombre de pixels PX dans une image I.

Dans un mode de réalisation non limitatif, la détermination de l'amplitude de l'éclairement dans la première région d'intérêt est effectuée sur une séquence d'images SQ, en conséquence le calcul de la valeur moyenne MEAN est effectué sur une séquence d'images SQ.

Cela permet de filtrer les fluctuations de la valeur moyenne MEAN qui peuvent survenir d'une image à une autre, et ainsi rendre plus fiable et stabiliser le calcul de la valeur moyenne MEAN.

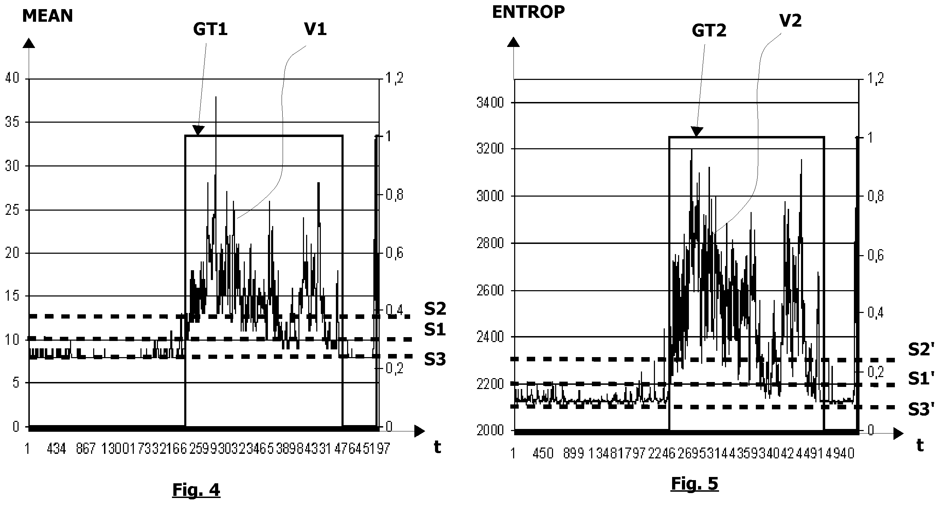

Un exemple non limitatif de variation de la valeur moyenne MEAN prise sur une séquence d'image SQ, est illustré sur le diagramme de la Fig. 4.

Dans un mode de réalisation non limitatif, on détermine un premier seuil S1 qui permet de déterminer en fonction de la valeur moyenne MEAN, si le véhicule se trouve de façon probable ans une zone éclairée ou non.

Dans un mode de réalisation non limitatif, on détermine en outre :
- un deuxième seuil S2 qui permet de déterminer en fonction de la valeur moyenne V1, si le véhicule se trouve de façon certaine dans une zone éclairée ; et
- un troisième seuil S3 qui permet de déterminer en fonction de la valeur moyenne V1, si le véhicule se trouve de façon certaine dans une zone non éclairée.

Comme on va le voir par la suite, ces deux seuils supplémentaires vont permettre d'ajuster le mode des projecteurs PJ du véhicule de façon plus rapide.

Sur la Fig. 4, le temps t est représenté en abscisse, tandis que la moyenne MEAN est représentée en ordonnée.

Sur ce diagramme sont représentés :
- les valeurs V1 de la valeur moyenne MEAN de la valeur des pixels PX
- le premier seuil S1 ;
- le deuxième seuil S2 ; et
- le troisième seuil S3.

Dans un exemple non limitatif, le premier seuil S1 est égal à 10.

Ainsi, si la valeur moyenne V1 se situe au dessus de ce premier seuil S1, on peut en déduire que le véhicule se trouve probablement dans une zone éclairée. Dans le cas contraire, on peut en déduire que le véhicule se trouve probablement dans une zone non éclairée.

Dans un exemple non limitatif, le deuxième seuil S2 est égal à 12.

Ainsi, si la valeur moyenne V1 se situe au dessus de ce deuxième seuil S2, on peut en déduire que le véhicule se trouve de façon sûre et certaine dans une zone éclairée.

Dans un exemple non limitatif, le troisième seuil S3 est égal à 8.

Ainsi, si la valeur moyenne V1 se situe en dessous de ce troisième seuil S3, on peut en déduire que le véhicule se trouve de façon sûre et certaine dans une zone non éclairée.

Dans un mode de réalisation non limitatif, à chaque seuil S1, S2, S3 est associé respectivement un compteur CT1, CT2, CT3 qui permet de déterminer un nombre de fois où ledit seuil associé est atteint sur une séquence d'images SQ.

Un compteur est initialisé à 0.

Un compteur est incrémenté à chaque fois que la valeur moyenne MEAN dépasse le seuil associé, une valeur V1 de la valeur moyenne MEAN étant calculée à chaque image acquise I de la séquence d'images SQ.

Par ailleurs, à chaque compteur CT1, CT2, CT3 est associé respectivement un critère de vérité PARAM1, PARAM2, PARAM3 qui est activé à 1, i.e. qui est marqué vrai, lorsque le compteur associé atteint un nombre de temporisation donné NB_CT.

Un critère de vérité est initialisé à 0, i.e à faux.

Ainsi, la détermination de l'amplitude de l'éclairement dans la première région d'intérêt ROI1 en fonction de la valeur moyenne MEAN est effectuée de la manière suivante. A chaque image I de la séquence d'images SQ considérée :
- On détermine une valeur V1 de la valeur moyenne MEAN ;
- On compare cette valeur V1 au différents seuils S1, S2, S3, et selon le résultat de la comparaison, on incrémente le compteur CT1, CT2, CT3 associé au seuil considéré S1, S2, ou S3 lorsque la valeur V1 dépasse ledit seuil considéré (pour S1 et S2) ou est inférieur au seuil considéré (pour S3). On notera que si la valeur V1 dépasse le premier seuil S1 et le deuxième seuil S2, seul le compteur associé CT2 au deuxième seuil S2 est incrémenté; si la valeur V1 dépasse le premier seuil S1 mais est inférieur au deuxième seuil S2, le compteur CT1 associé au premier seuil S1 est incrémente ; et enfin si la valeur V1 est inférieure au troisième seuil S3, le compteur CT3 associé est incrémenté.

Dès qu'un des compteurs atteint un nombre de temporisation donné NB_CT, le critère de vérité associé PARAM est activé à 1. Cela signifie que :
- le véhicule V se trouve dans une zone éclairée ou non respectivement si :
   - le critère de vérité PARAM1 est à 1 ce qui correspond à un état probable de zone éclairée ;
   - le critère de vérité PARAM1 est à 0 et tous les autres paramètres PARAM2 et PARAM3 sont à 0 ce qui correspond à un état probable de zone non éclairée ;
- le véhicule V se trouve de façon certaine dans une zone éclairée si :
   - le critère de vérité PARAM2 est à 1 ce qui correspond à un état sûr de zone éclairée ; et
- le véhicule V se trouve se trouve de façon certaine dans une zone non éclairée si :
   - le critère de vérité PARAM3 est à 1 ce qui correspond à un état sûr de zone non éclairée.

Dans un exemple non limitatif le nombre de temporisation NB_CT est égal à 20 (correspondant à 20 images pour une séquence SQ et à 2 secondes dans le cas d'une caméra qui acquiert 10 images/seconde).

Ainsi, un avantage de déterminer l'amplitude de l'éclairement dans la première région d'intérêt ROI1 est d'éviter de considérer un environnement qui est non éclairé comme un environnement éclairé dans le cas où l'on déterminerait le degré d'éclairement uniquement en fonction d'un nombre de pixels PX dont la valeur se trouve au dessus d'un niveau de référence REF, comme on va le voir plus loin.

Par exemple, pour une caméra 12 bits, s'il existe un tiers des pixels PX d'une image acquise I dont la valeur se situe proche de 0 (couleur noir), un tiers dont la valeur se situe proche de 2048, et un tiers dont la valeur se situe proche de 4096 (couleur blanche), l'image acquise, représentative de l'environnement du véhicule V, sera très sombre bien qu'il existe un nombre de pixels PX important dont la valeur se situe proche de la couleur blanche par exemple.

**Dans une deuxième sous-étape 3b),** on détermine le niveau de détail des informations contenues dans la première région d'intérêt ROI1 (sous-étape CALC_DET(ENTROP(S1', S2', S3' - CT1', CT2', CT3' - PARAM1', PARAM2', PARAM3'))).

Ce paramètre va servir également par la suite pour déterminer si le véhicule V se situe dans un environnement éclairé ou non et ainsi ajuster par la suite les projecteurs PJ.

A cet effet, dans un mode de réalisation non limitatif, on calcule l'entropie ENTROP d'une image. L'entropie ENTROP peut être calculée selon les méthodes de SHANON ou encore de la Matrice de cooccurrence, dans des exemples de réalisation non limitatifs. Ces méthodes étant bien connues de l'homme du métier, elles ne sont pas décrites ici.

En effet, sur des routes illuminées, par exemple, lorsque le véhicule V circule en ville, il existe une pluralité de détails représentatifs de la ville, l'entropie a une valeur élevée. Au contraire, sur des routes non illuminées, par exemple en dehors de la ville, à la campagne, l'image est plus homogène, l'entropie a une valeur plus faible.

Dans un mode de réalisation non limitatif, la détermination du niveau de détail des informations contenues dans la première région d'intérêt ROI1 est effectuée sur une séquence d'images SQ, en conséquence le calcul de l'entropie ENTROP est effectué sur une séquence d'images SQ.

Cela permet de filtrer les fluctuations de l'entropie ENTROP qui peuvent survenir d'une image à une autre, et ainsi rendre plus fiable et stabiliser le calcul de l'entropie.

Un exemple non limitatif de valeurs V2 d'entropie ENTROP prise sur une séquence d'image SQ est illustré sur le diagramme de la Fig. 5.

Trois seuils S1', S2' et S3' sont déterminés de la même façon que dans le cas de la valeur moyenne MEAN vue précédemment, en fonction de l'entropie ENTROP, pour savoir si on se trouve dans une zone éclairée ou non, et ce de façon certaine ou uniquement probable.

De la même manière, trois compteurs CT1', CT2', et CT3' associés respectivement à ces trois seuils S1', S2' et S3' sont déterminés, ainsi que trois paramètres PARAM1', PARAM2', PARAM3' associés respectivement à ces trois compteurs CT1', CT2', et CT3'.

La même signification pour ces compteurs et paramètres est à prendre en compte, comme vu précédemment avec la valeur moyenne MEAN, mais appliquée à l'entropie ENTROP.

Sur la Fig. 5, le temps t est représenté en abscisse, tandis que l'entropie ENTROP est représentée en ordonnée. Sur ce diagramme sont représentés :
- les valeurs V2 de l'entropie ENTROP ;
- le premier seuil S1' ;
- le deuxième seuil S2' ; et
- le troisième seuil S3'.

Dans un exemple non limitatif, le premier seuil S1' est égal à 2200.

Ainsi, si la valeur V2 de l'entropie ENTROP se situe au dessus de ce premier seuil S1', on peut en déduire que le véhicule se trouve dans une zone éclairée. Dans le cas contraire, on peut en déduire que le véhicule se trouve dans une zone non éclairée.

Dans un exemple non limitatif, le deuxième seuil S2' est égal à 2300.

Ainsi, si la valeur V2 de l'entropie ENTROP se situe au dessus de ce deuxième seuil S2', on peut en déduire que le véhicule se trouve de façon sûre dans une zone éclairée.

Dans un exemple non limitatif, le troisième seuil S3' est égal à 2100.

Ainsi, si la valeur V2 de l'entropie ENTROP se situe en dessous de ce troisième seuil S3', on peut en déduire que le véhicule se trouve de façon sûre dans une non zone éclairée.

Ainsi, la détermination du niveau de détail des informations contenues dans la première région d'intérêt ROI1 en fonction de l'entropie ENTROP est effectuée de la manière suivante.

A chaque image I de la séquence d'images SQ considérée :
- On détermine une valeur V2 de l'entropie ;
- On compare cette valeur V2 au différents seuils S1', S2', S3', et selon le résultat de la comparaison, on incrémente le compteur CT1', CT2', CT3' associé au seuil considéré S1', S2', ou S3' lorsque la valeur V2 dépasse ledit seuil considéré (pour S1', S2') ou est inférieure au seuil considéré (pour S3'). Les compteurs CT1', CT2', CT3' sont incrémentés de la même manière que ce qui a été décrit dans la première sous-étape 3a).

De la même manière que dans la première sous-étape 3a), dès qu'un des compteurs atteint le nombre de temporisation donné NB_CT, le critère de vérité associé PARAM' est activé à 1.

Les mêmes conclusions sont appliquées que précédemment.

**Dans une troisième sous-étape 3c),** on détermine la répartition de l'éclairement dans la première région d'intérêt ROI1 (sous-étape CALC_DISP(NBABOV(S1", S2", S3" - CT1", CT2", CT3" - PARAM1", PARAM2", PARAM3"))), c'est-à-dire la répartition des niveau de gris dans la première région d'intérêt ROI1.

Ce paramètre va servir également par la suite pour déterminer si le véhicule V se situe dans un environnement éclairé ou non et ainsi ajuster par la suite les projecteurs PJ.

On détermine ainsi la luminosité moyenne sur toute la première région d'intérêt ROI1. On connaît ainsi la répartition de l'éclairement sur toute la région ROI1.

En effet, sur des routes non éclairées, par exemple, lorsque le véhicule V circule en campagne, il se peut que sur une route ascendante, le véhicule V se retrouve devant d'un véhicule arrivant en face et dont les projecteurs en mode position route, donc plein phare.

On a donc quelques pixels PX uniquement qui font monter la valeur moyenne MEAN des pixels dans la région d'intérêt ROI1. Si seul le paramètre d'amplitude est utilisé, comme décrit dans la première sous-étape 3a), cela peut engendrer des erreurs quand à la détermination de l'éclairage d'une zone.

Comme on va le voir ci-après, ce troisième paramètre évite de conclure que le véhicule V se trouve dans un environnement éclairé s'il existe une unique source lumineuse telle que l'éclairage de projecteurs PJ d'un véhicule arrivant en face du véhicule V considéré.

A cet effet, dans un mode de réalisation non limitatif, on calcule le nombre de pixels NBABOV dont la valeur se situe au dessus d'un niveau de référence REF.

Dans un exemple non limitatif, le niveau de référence REF est égal à la moyenne des pixels dans une image.

Dans un mode de réalisation non limitatif, la détermination de la répartition de l'éclairement dans la première région d'intérêt ROI1 est effectuée sur une séquence d'images SQ. En conséquence le calcul du nombre de pixels NBABOV est effectué sur une séquence d'images SQ.

Cela permet de filtrer les fluctuations du nombre de pixels NBABOV qui peuvent survenir d'une image à une autre, et ainsi rendre plus fiable et stabiliser le calcul du nombre de pixels NBABOV.

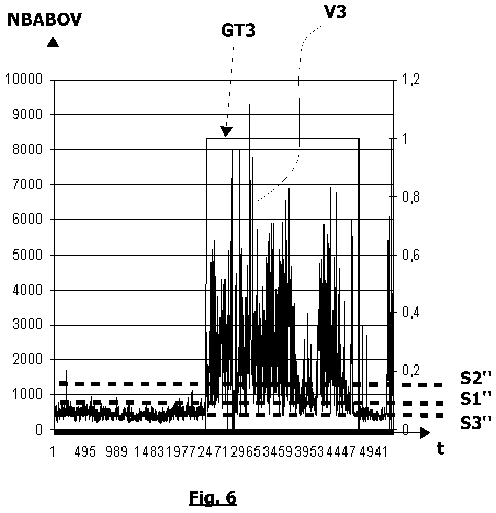

Un exemple non limitatif de valeurs V3 du nombre de pixels NBABOV pris sur une séquence d'images SQ est illustré sur le diagramme de la Fig. 6.

Trois seuils S1", S2" et S3" sont déterminés de la même façon que dans le cas de la valeur moyenne MEAN ou de l'entropie ENTROP vues précédemment, en fonction du nombre de pixels NBABOV, pour savoir si on se trouve dans une zone éclairée ou non, et ce de façon sûre ou uniquement probable non.

De la même manière, trois compteurs CT1", CT2", et CT3" associés respectivement à ces trois seuils S1", S2" et S3" sont déterminés, ainsi que trois paramètres PARAM1", PARAM2", PARAM3" associés respectivement à ces trois compteurs CT1", CT2", et CT3".

La même signification pour ces compteurs et paramètres est à prendre en compte, comme vu précédemment avec la valeur moyenne MEAN ou l'entropie ENTROP, mais appliquée au nombre de pixels NBABOV.

Sur la Fig. 6, le temps t est représenté en abscisse, tandis que le nombre de pixels NBABOV est représenté en ordonnée. Sur ce diagramme sont représentés :
- les valeurs V3 du nombre de pixels NBABOV qui sont au dessus de la valeur de référence REF ;
- le premier seuil S1" ;
- le deuxième seuil S2" ; et
- le troisième seuil S3".

Dans un exemple non limitatif, le premier seuil S1" est égal à 900. Ainsi, si la valeur V3 du nombre de pixels NBABOV se situe au dessus de ce premier seuil S1", on peut en déduire que le véhicule se trouve dans une zone éclairée. Dans le cas contraire, on peut en déduire que le véhicule se trouve dans une zone non éclairée.

Dans un exemple non limitatif, le deuxième seuil S2" est égal à 1100.

Ainsi, si la valeur V3 du nombre de pixels NBABOV se situe au dessus de ce deuxième seuil S2", on peut en déduire que le véhicule se trouve de façon sûre dans une zone éclairée.

Dans un exemple non limitatif, le troisième seuil S3" est égal à 500.

Ainsi, si la valeur V3 du nombre de pixels NBABOV se situe en dessous de ce troisième seuil S3", on peut en déduire que le véhicule se trouve de façon sûre dans une non zone éclairée.

Ainsi, la détermination de la répartition de l'éclairement dans la première région d'intérêt ROI1 en fonction du nombre de pixels NBABOV est effectuée de la manière suivante. A chaque image I de la séquence d'images SQ considérée :
- On détermine une valeur V3 du nombre de pixels NBABOV ;
- On compare cette valeur V3 au différents seuils S1", S2", S3", et selon le résultat de la comparaison, on incrémente le compteur CT1", CT2", CT3" associé au seuil considéré S1", S2", ou S3" lorsque la valeur V3 dépasse ledit seuil considéré (pour S1" et S2") et inférieure au seuil considéré (pour S3"). Les compteurs CT1", CT2", CT3" sont incrémentés de la même manière que ce qui a été décrit dans la première sous-étape 3a).

De la même manière que dans la première sous-étape 3a) ou dans la deuxième sous-étape 3b), dès qu'un des compteurs atteint le nombre de temporisation NB_CT, le critère de vérité associé PARAM" est activé à 1.

Les mêmes conclusions sont appliquées que précédemment.

On notera que bien entendu, dans un mode de réalisation non limitatif, ces trois sous-étapes 3a), 3b) et 3c) peuvent être effectuées en parallèle l'une de l'autre.

On notera que les valeurs données à titre d'exemple non limitatifs pour les seuils S1, S2, S3 ; S1', S2', S3' ; S1", S2", S3" sont des valeurs pour une caméra en noir et blanc.

Dans un autre exemple non limitatif, les seuils S1, S2, S3 ; S1', S2', S3' ; S1", S2", S3" peuvent prendre comme valeur respective la valeur 5, 9, 3 ; 1900, 2100, 1300 et 20, 30, 5 pour une caméra couleur.

On notera que la détection de zones éclairées de nuit est utile notamment dans le cas où la détection d'objets éclairants tels que des lampadaires s'avère difficile.

Ainsi, par rapport à la détection de lampadaires décrite ci-après, la détection de zones éclairées de nuit va être utile dans les cas suivants (non exhaustifs) :
- lorsque les lampadaires sont placés trop haut et sont donc peut-être hors du champ de la caméra ;
- lorsque la route est étroite, les lampadaires peuvent être également hors du champ de la caméra ;
- lorsqu'un ou plusieurs lampadaires ne fonctionnent pas ;
- lorsque la source lumineuse des lampadaires est cachée par des obstacles tels que des arbres (la détection des lampadaires étant plus difficile).

La détection de zones éclairées de nuit permet de prendre en compte l'environnement du véhicule et de détecter si le véhicule se trouve dans un environnement éclairé ou non, et d'adapter en conséquence le mode d'éclairage des projecteurs PJ du véhicule, contrairement à une solution qui ne prend en compte que la vitesse du véhicule pour adapter le mode d'éclairage du véhicule, cette dernière solution étant une solution peu fiable.

### Détection d'objets éclairants

Afin d'avoir une fiabilité accrue dans la reconnaissance d'un environnement éclairé ou non, dans un mode de réalisation non limitatif, le procédé d'ajustement de l'éclairage des projecteurs comporte une étape supplémentaire de détection d'objets éclairants comportant les sous-étapes, telles qu'illustrées à la Fig. 1, de :
- Déterminer une troisième région d'intérêt ROI3 dans une image acquise I par une caméra vidéo CAM du véhicule V (étape DEF_RO3(H));
- Extraire au moins un objet O dans ladite troisième région d'intérêt ROI3 déterminée, l'objet extrait OE correspondant à une pluralité de pixels PX successifs ayant une valeur supérieure à un premier niveau de gris G1 (étape EXTRACT_O(ROI3));
- Sélectionner les objets extraits OE qui ont une taille SZ supérieure à une taille déterminée T1 (étape SELECT_O(SZ>T1));

Dans un mode de réalisation non limitatif, le procédé comporte en outre les étapes supplémentaires de :
- Valider la sélection d'un objet O en fonction de sa trajectoire TRJ déterminée dans une séquence d'images SQ (étape VALID_O(TRJ)).

Les étapes de la détection d'objets éclairants sont décrites en détail ci-après.

**Dans une quatrième étape 4),** on détermine une troisième région d'intérêt ROI3 dans une image acquise I par une caméra vidéo CAM du véhicule V.

Dans un mode de réalisation non limitatif, la troisième région d'intérêt ROI3 se situe au dessus de l'horizon H dans l'image acquise I.

Cette région d'intérêt ROI3 suffit pour détecter les objets éclairants tels que les lampadaires qui se situent toujours au dessus de l'horizon. On améliore ainsi le temps de traitement sur l'image acquise I.

On notera que selon une variante de réalisation non limitative, l'horizon H dans l'image acquise I est déterminé en fonction de l'assiette du véhicule V.

Ainsi, à partir de l'information des capteurs d'assiette. On définit un horizon quand le véhicule est à l'horizontale puis quand il y a du tangage, on modifie la position du véhicule en fonction de l'angle retourne par les capteurs d'assiette.

Si on ne prend pas l'information des capteurs d'assiette, des phares de véhicules venant en face du véhicule considéré peuvent se retrouver dans la troisième région d'intérêt ROI3 (ou au contraire des lampadaires ne plus s'y trouver), ce qui entraînerait des erreurs dans la détection.

**Dans une cinquième étape 5),** on extrait au moins un objet O dans ladite troisième région d'intérêt ROI3 déterminée, l'objet extrait OE correspondant à une pluralité de pixels PX successifs ayant une valeur supérieure à un premier niveau de gris G1 représentatif d'un éclairage public tel que les lampadaires.

Des pixels successifs sont des pixels qui se touchent.

Cela permet d'extraire les lampadaires qui éclairent la route.

On notera que le niveau de gris G1 dépend des caractéristiques de la caméra CAM utilisée (résolution, dynamique, temps d'intégration). Dans un exemple de réalisation non limitatif, le premier niveau de gris G1 est égale à 300 pour une caméra 10 bits.

On obtient ainsi un ou plusieurs objets extraits OE.

**Dans une sixième étape 6),** on sélectionne les objets extraits OE qui ont une taille SZ supérieure à une taille déterminée T1.

Dans un exemple de réalisation non limitatif, la taille déterminée T1 est égale à 5*5 pixels.

Dans un mode de réalisation non limitatif, on sélectionne les objets extraits qui ont une taille SZ inférieure à une deuxième taille déterminée T2. Dans un exemple de réalisation non limitatif, la taille déterminée T2 est égale à 50*50 pixels.

On vérifie ainsi la taille des objets extraits et on ne prend pas en compte les objets trop petits ou trop grands et donc disproportionnés.

On élimine ainsi, d'une part, des objets extraits qui pourraient être des lampadaires vu de loin, des phares de voitures ou encore de l'éclairage d'habitation (on ne permutera pas en mode d'éclairage code lorsqu'on est encore trop loin d'un environnement éclairé), et d'autre part, des objets extraits qui prendraient trop de temps de calcul de par leur taille trop grande.

On obtient ainsi un ou plusieurs objets sélectionnés OS.

On notera que les lampadaires de route ayant différentes formes, on ne se soucie pas de la forme de l'objet sélectionné.

Bien entendu, dans un mode de réalisation non limitatif, on peut ajouter une étape dans laquelle, on sélectionne un objet extrait OE en fonction de sa taille mais également de sa forme.

**Dans une septième étape 7),** on valide la sélection d'un objet OS en tant qu'objet éclairant et représentatif d'un lampadaire.

Dans un premier mode de réalisation, on valide les objets sélectionnés qui se trouvent tout en haut de l'image acquise. Cela permet de ne pas éliminer les lampadaires qui apparaissent très tard dans une image, en raison du fait qu'ils étaient cachés à l'image précédente ou que la route sur laquelle circule le véhicule était en courbe.

Dans un deuxième mode de réalisation non limitatif, on valide un objet OS sur une séquence d'images acquises SQ.

Bien entendu, ces deux modes peuvent être combinés.

Dans une première variante de réalisation non limitative de ce deuxième mode de réalisation, la validation d'un objet sélectionné OS s'effectue en fonction du nombre de fois où il apparaît dans une séquence d'images SQ. Autrement dit, la validation s'effectue en fonction du nombre d'images I dans lequel l'objet sélectionné OS apparaît dans une séquence SQ. Ainsi dans un exemple non limitatif, s'il apparaît au moins dans trois images I, on valide cet objet en tant que lampadaire.

Dans une deuxième variante de réalisation non limitatif, la validation s'effectue en fonction de la trajectoire TRJ d'un objet sélectionné OS dans la séquence d'images SQ.

Dans des modes de réalisation non limitatifs, la trajectoire TRJ d'un objet est définie au moyen de méthodes telles que les méthodes linéaire ou de Kalman. Ces méthodes étant connues de l'homme du métier, elles ne seront pas décrites ici.

Ainsi, dans un exemple non limitatif, on valide les objets dont les trajectoires vont du centre d'une première image acquise I de la séquence SQ d'images acquises vers les coins supérieurs de la dernière image acquise I de la séquence SQ d'images.

Ce critère de trajectoire TRJ est un critère supplémentaire qui permet de fiabiliser la détection de l'éclairage de nuit tel que des lampadaires.

On notera qu'en pratique lorsque l'on valide un objet O, dans un mode de réalisation non limitatif, on positionne un fanion à l'état 1.

Dans un mode de réalisation non limitatif, comme la validation d'un objet prend un certain temps et comme la distance entre deux lampadaires peut être importante (de l'ordre de 50 mètres par exemple) en raison par exemple d'un lampadaire qui est abîmé, une temporisation TP est déclenchée à la suite d'une validation d'un objet sélectionné OS.

Dans une variante de réalisation non limitative, la temporisation TP est définie en mètres et est fonction de la vitesse VIT du véhicule dans cette temporisation. Par exemple 40km/h correspond à faire 50 mètres en 4,5 secondes. Cela évite de vérifier la vitesse du véhicule à chaque image.

La temporisation TP est appliquée de la manière suivante sur une séquence d'images SQ.
- Si l'objet validé en premier dans une image acquise I de la séquence d'images acquise SQ ne se retrouve plus dans l'image suivante de la séquence et s'il n'existe plus aucun objet sélectionné dans l'image suivante I+1,
   - Alors la temporisation TP est égale à 25 mètres, dans un exemple non limitatif (il y a une forte probabilité que le véhicule se trouve dans un environnement non éclairé). On attend donc un nombre d'images correspondant à 25 mètres avant d'effectuer les étapes suivantes 7) et/ou 8) ;
   - Sinon cela veut dire qu'il existe un objet sélectionné au loin, la temporisation TP est égale à 50 mètres, (il y a une forte probabilité que le véhicule se trouve dans un environnement encore éclairé). On attend donc un nombre d'images correspondant à 50 mètres avant d'effectuer les étapes suivantes 7) et/ou 8) ;
- On effectue les étapes 1) à 5) décrites précédemment pour l'image suivante I+2 etc et pour les images suivantes jusqu'à la fin des images correspondant à la temporisation TP ;
- Si au bout de cette temporisation TP, on n'a pas validé de nouvel objet, alors on positionne le fanion de validation à l'état 0 et on effectue les étapes suivantes 7) et/ou 8)..

Ainsi, la temporisation TP réduite de 25 mètres permet de décider plus rapidement de se positionner en mode route lorsque le véhicule sort d'un environnement éclairé quand le dernier lampadaire n'est plus visible dans l'image acquise courante.

Par ailleurs, dans une variante de réalisation non limitative de la temporisation TP, toute temporisation TP supérieure à 5 secondes, lorsque l'on sort d'un environnement éclairé tel qu'une ville, est écartée. Cela permet de borner la temporisation et ne pas en avoir de trop longue. Le dispositif est ainsi plus réactif.

On notera que la validation sur une séquence d'images SQ s'effectue pour chaque objet sélectionné OS dans une image acquise I.

### Ajustement du mode d'éclairage des projecteurs du véhicule :

Ainsi, après voir détecté des zones éclairées de nuit et des objets éclairants, **dans une huitième étape 8)**, on détermine le mode d'éclairage des projecteurs PJ du véhicule automobile.

Trois modes de réalisation non limitatifs d'ajustement de l'éclairage des projecteurs PJ sont décrits :
- en fonction du degré d'éclairement Dg et des paramètres propres PV au véhicule V ; ou
- en fonction des objets sélectionnés OS et des paramètres propres PV au véhicule V ; ou
- en fonction du degré d'éclairement Dg, des objets validés, et des paramètres propres au véhicule.

Dans un mode de réalisation non limitatif, les paramètres propres au véhicule sont :
- son angle au volant α ; et/ou
- sa vitesse VIT.

Dans un mode de réalisation non limitatif, un paramètre supplémentaire du véhicule est un angle d'assiette permettant d'ajuster verticalement les régions d'intérêt précédemment citées. Bien entendu, un seul des trois paramètres peut être utilisé, ou deux en combinaison comme décrit dans l'exemple ci-dessous, ou les trois en combinaison.

### Premier mode de réalisation

Dans un premier mode de réalisation, on détermine le mode d'éclairage des projecteurs PJ du véhicule automobile en fonction du degré d'éclairement Dg déterminé selon l'étape 3) vue précédemment, et des paramètres propres PV au véhicule V.

Cela veut dire que l'on détermine le mode d'éclairage des projecteurs en fonction uniquement de la détection des zones éclairées de nuit par les objets éclairants.

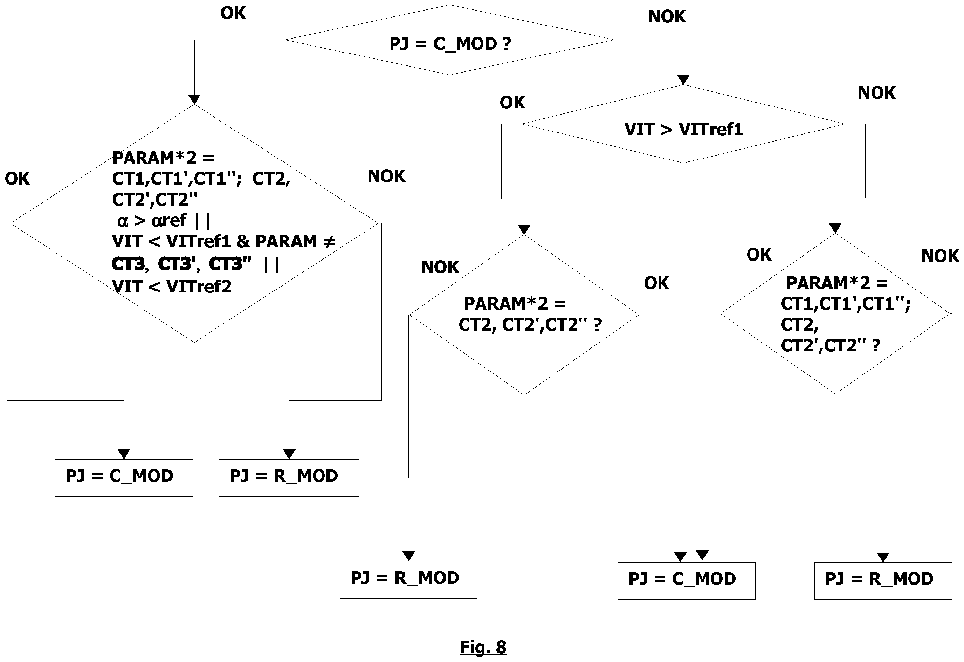

Ainsi, la détermination selon ce premier mode de réalisation s'effectue selon les étapes suivantes illustrées sur le diagramme de la Fig. 8.

Dans le cas où l'état des projecteurs PJ du véhicule V est initialement en position code C_MOD, i.e. que le véhicule se trouve dans un environnement éclairé :
- Si au moins deux critères de vérité PARAM correspondent à un état probable de zone éclairée ou à un état sûr de zone éclairée ;
- Ou si l'angle au volant α est supérieur à un angle de référence aref ;
- Ou si sa vitesse VIT est inférieure à une première vitesse de référence VITref1 et aucun de critère de vérité PARAM correspond à un état sûr de zone non éclairée ;
- OU si sa vitesse VIT est inférieure à une deuxième vitesse de référence VITref2 ;
- Alors l'état des projecteurs PJ est figé : on demeure en position code C_MOD ;
- Sinon, l'état des projecteurs PJ est modifié : on ajuste le mode d'éclairage des projecteurs PJ en position route R_MOD.

On notera que l'on choisit au moins deux critères de vérité PARAM, ce qui correspond à choisir la majorité, pour avoir plus de fiabilité.

Les mêmes explications données dans le deuxième mode de réalisation décrit ci-dessous pour l'angle au volant a, la première vitesse de référence VITref1 et la deuxième vitesse de référence VITref2 s'appliquent pour ce premier mode de réalisation.

On notera cependant que si la vitesse VIT du véhicule reste inférieure à la première vitesse de référence VITref1, on demeure en position code C_MOD, sauf si aucun des critères de vérité PARAM ne montre que l'on se trouve de façon sûre dans un environnement non éclairé (donc qu'il n'y a aucune zone éclairée dans une image de cet environnement). On part de l'hypothèse qu'il est peu probable que l'on sorte d'une zone éclairée sous cette première vitesse de référence VITref1, mais que cela peut arriver et l'on veut être sûr que l'image de l'environnement dans lequel circule le véhicule est très sombre.

Dans le cas où l'état des projecteurs PJ du véhicule V est initialement en position route R_MOD, i.e. que le véhicule se trouve dans un environnement non éclairé :
- Si sa vitesse VIT est supérieure à la première vitesse de référence VITref1 ;
   - Si au moins deux critères de vérité PARAM correspondent à un état sûr de zone éclairée ;
      - Alors l'état des projecteurs PJ est modifié : on ajuste le mode d'éclairage des projecteurs PJ en position code C_MOD.
   - Si sa vitesse VIT est inférieure à la première vitesse de référence VITref1 ;
      - Si au moins deux critères de vérité PARAM correspondent à un un état probable de zone éclairée ou à un état sûr de zone éclairée ;
         - Alors l'état des projecteurs PJ est modifié : on ajuste le mode d'éclairage des projecteurs PJ en position code C_MOD.
         - Sinon, l'état des projecteurs PJ est figé : on demeure en position route R_MOD.

On notera qu'en ce qui concerne le test sur la vitesse VIT lorsqu'elle est supérieure à la première vitesse de référence VITref1, il y a une condition de plus (sur les deux critères PARAM) que les tests sur la vitesse VIT lorsqu'elle est inférieure à la première vitesse de référence VITref1 car on considère que dans un environnement éclairé, tel qu'une ville par exemple, le véhicule doit rouler à basse vitesse. Ainsi, plus la vitesse VIT du véhicule est élevée, plus les conditions pour passer en position code C_MOD sont restrictives.

### Deuxième mode de réalisation

Dans un deuxième mode de réalisation non limitatif, on détermine un mode d'éclairage des projecteurs PJ du véhicule automobile en fonction :
- des objets sélectionnés OS à la sixième étape 6), et
- de paramètres propres PV au véhicule V.

Cela veut dire que l'on détermine le mode d'éclairage des projecteurs en fonction de la détection d'objets éclairants.

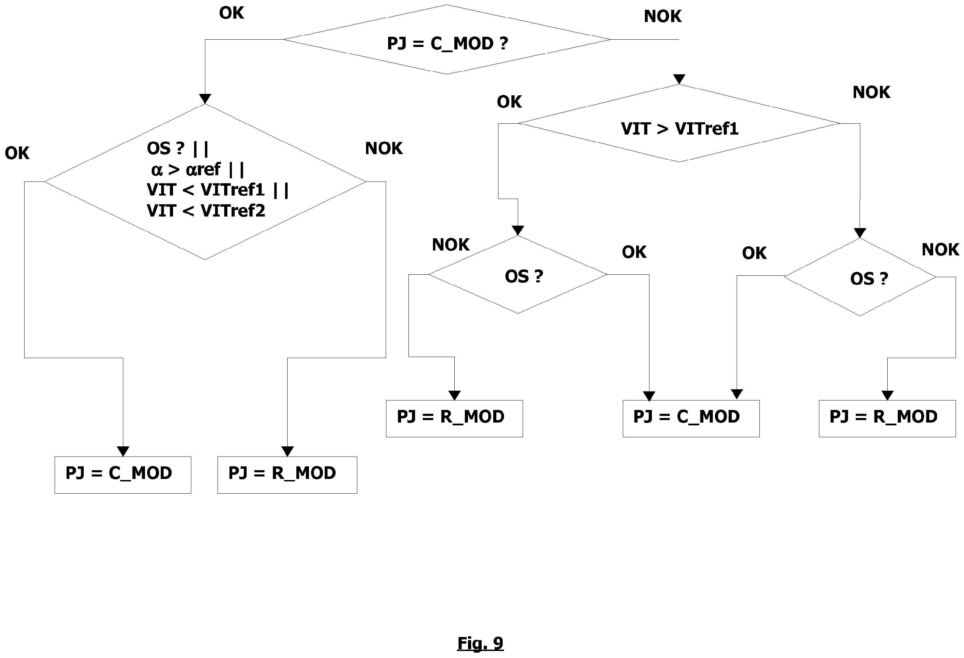

La détermination selon ce deuxième mode de réalisation s'effectue selon les étapes suivantes illustrées sur le diagramme de la Fig. 9.

Dans le cas où l'état des projecteurs PJ du véhicule V est initialement en position code C_MOD, i.e. que le véhicule se trouve dans un environnement éclairé :
- Si au moins un objet (i.e des lampadaires) a été sélectionné, (cela veut dire que l'on est dans un environnement éclairé) ;
- Ou si l'angle au volant α est supérieur à un angle de référence aref ;
- Ou si sa vitesse VIT est inférieure à une première vitesse de référence VITref1 ;
- OU si sa vitesse VIT est inférieure à une deuxième vitesse de référence VITref2 ;
   - Alors l'état des projecteurs PJ est figé : on demeure en position code C_MOD ;
   - Sinon, l'état des projecteurs PJ est modifié : on ajuste le mode d'éclairage des projecteurs PJ en position route R_MOD.

On notera que dans les virages serrés, on peut perdre des lampadaires, ils ne sont donc pas sélectionnés. De plus, il est rare de sortir d'un environnement éclairé, par exemple d'une ville, ou d'entrer dans un environnement éclairé, dans un virage serré. On part donc de l'hypothèse, que lorsque l'angle au volant α est supérieur à l'angle de référence aref, cela signifie que l'on est toujours dans l'environnement éclairé dans lequel circule le véhicule V (les projecteurs PJ étant initialement en position code C_MOD). On fige donc l'état actuel des projecteurs.

Dans un exemple de réalisation non limitatif, l'angle de référence αref est égal à 100°.

Par ailleurs, on notera également que l'on part de l'hypothèse que si la vitesse VIT du véhicule est inférieure à la première vitesse de référence VITref1, cela signifie que l'on est toujours dans l'environnement éclairé, par exemple en ville, dans lequel circule le véhicule V (les projecteurs PJ étant initialement en position code C_MOD). On fige donc l'état actuel des projecteurs.

Dans un mode de réalisation non limitatif, la première vitesse de référence VITref1 se situe dans un intervalle entre 30 et 50km/h. Bien entendu, d'autres valeurs peuvent être considérées telles que 60km/h par exemple.

Par ailleurs, on part également de l'hypothèse que lorsque l'on sort d'une zone éclairée, par exemple une ville, le véhicule V accélère. Autrement dit, il est peu probable que l'on sorte d'une zone éclairée sous cette première vitesse de référence VITref1. Donc si la vitesse VIT reste inférieure à cette première vitesse de référence VITref1, on demeure position code C_MOD.

Enfin, on part de l'hypothèse, qu'il n'est pas possible de sortir d'un environnement éclairé, par exemple d'une ville, à si faible vitesse, c'est-à-dire lorsque la vitesse du véhicule est inférieure à la deuxième vitesse de référence VITref2. Ainsi, dans un mode de réalisation non limitatif, la deuxième vitesse de référence VITref2 est comprise dans un intervalle entre 10 et 30km/h.

Dans le cas où l'état des projecteurs PJ du véhicule V est initialement en position route R_MOD, i.e. que le véhicule se trouve dans un environnement non éclairé :
- Si sa vitesse VIT est supérieure à la première vitesse de référence VITref1 ;
   - Si au moins un objet (i.e des lampadaires) a été sélectionné, (cela veut dire que l'on est dans un environnement éclairé) ;
      - Alors l'état des projecteurs PJ est modifié : on ajuste le mode d'éclairage des projecteurs PJ en position code C_MOD ;
      - Sinon, l'état des projecteurs PJ est figé : on demeure en position route R_MOD.
- Si sa vitesse VIT est inférieure à la première vitesse de référence VITref1 ;
   - Si au moins un objet (i.e des lampadaires) a été sélectionné, (cela veut dire que l'on est dans un environnement éclairé) :
      - Alors l'état des projecteurs PJ est modifié : on ajuste le mode d'éclairage des projecteurs PJ en position code C_MOD ;
   - Sinon, l'état des projecteurs PJ est figé : on demeure en position route R_MOD.

Dans un mode de réalisation non limitatif, la condition concernant le nombre d'objets sélectionnés est paramétrable. On peut décider de modifier l'état des projecteurs si un seul objet a été sélectionné, ou au moins deux objets ont été sélectionnés etc.

Dans un mode de réalisation non limitatif, on peut ajuster le mode d'éclairage en fonction d'un objet validé au lieu d'un objet sélectionné uniquement. On remplace la condition « Si au moins un objet a été sélectionné» par une condition « Si au moins un objet a été validé » dans les étapes d'ajustement décrites ci-dessus.

### Troisième mode de réalisation

Dans un troisième mode de réalisation non limitatif, on détermine le mode d'éclairage des projecteurs PJ du véhicule automobile en fonction en outre :
- des objets validés selon l'étape 7) vue précédemment ;
- du degré d'éclairement Dg déterminé selon l'étape 3) vue précédemment ; et
- de paramètres propres PV au véhicule V.

Cela veut dire que l'on détermine le mode d'éclairage des projecteurs en fonction de la détection des objets éclairants et de la détection des zones éclairées de nuit par ces objets éclairants.

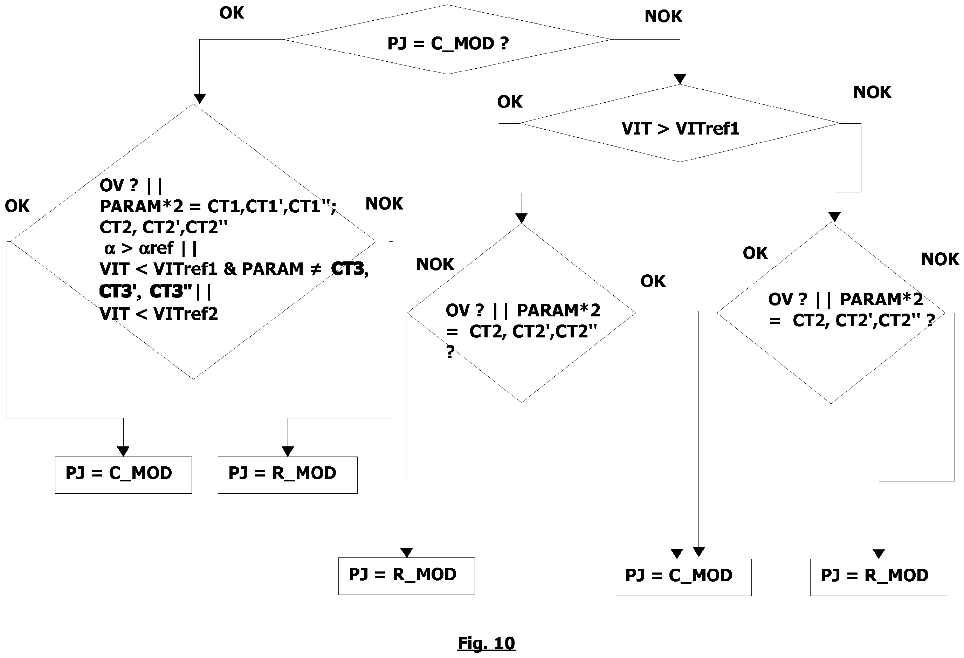

Ainsi, la détermination selon ce troisième mode de réalisation s'effectue selon les étapes suivantes illustrées sur le diagramme de la Fig. 10.

Dans le cas où l'état des projecteurs PJ du véhicule V est initialement en position code C_MOD, i.e. que le véhicule se trouve dans un environnement éclairé :
- Si au moins un objet (i.e des lampadaires) a été validé, (cela veut dire que l'on est dans un environnement éclairé) ;
- Ou si au moins deux critères de vérité PARAM correspondent à un état probable de zone éclairée, ou un état sûr de zone éclairée ;
- Ou si l'angle au volant α est supérieur à un angle de référence aref ;
- Ou si sa vitesse VIT est inférieure à une première vitesse de référence VITref1 et aucun des critères de vérité PARAM ne correspond à un état sûr de zone non éclairée ;
- Ou si sa vitesse VIT est inférieure à une deuxième vitesse de référence VITref2 ;
   - Alors l'état des projecteurs PJ est figé : on demeure en position code C_MOD ;
   - Sinon, l'état des projecteurs PJ est modifié : on ajuste le mode d'éclairage des projecteurs PJ en position route R_MOD.

On notera que l'on choisit au moins deux critères de vérité PARAM, ce qui correspond à choisir la majorité, pour avoir plus de fiabilité.

Les mêmes explications données dans le deuxième mode de réalisation pour l'angle au volant a, la première vitesse de référence VITref1 et la deuxième vitesse de référence VITref2 s'appliquent pour ce troisième mode de réalisation.

On notera cependant que si la vitesse VIT du véhicule reste inférieure à la première vitesse de référence VITref1, on demeure en position code C_MOD, sauf si aucun des critères de vérité PARAM ne montre que l'on se trouve de façon sûre dans un environnement non éclairé (donc qu'il n'y a aucune zone éclairée dans une image de cet environnement). On part de l'hypothèse qu'il est peu probable que l'on sorte d'une zone éclairée sous cette première vitesse de référence VITref1, mais que cela peut arriver et l'on veut être sûr que l'image de l'environnement dans lequel circule le véhicule est très sombre.

Dans le cas où l'état des projecteurs PJ du véhicule V est initialement en position route R_MOD, i.e. que le véhicule se trouve dans un environnement non éclairé :
- Si sa vitesse VIT est supérieure à la première vitesse de référence VITref1 ;
   - Si au moins un objet (i.e des lampadaires) a été validé, (cela veut dire que l'on est dans un environnement éclairé) ;
   - Ou si au moins deux critères de vérité PARAM correspondent à un état sûr de zone éclairée ;
      - Alors l'état des projecteurs PJ est modifié : on ajuste le mode d'éclairage des projecteurs PJ en position code C_MOD.

Par contre,
- Si sa vitesse VIT est inférieure à la première vitesse de référence VITref1 ;
   - Si au moins un objet (i.e des lampadaires) a été validé, (cela veut dire que l'on est dans un environnement éclairé) ;
   - Ou si au moins deux critères de vérité PARAM correspondent à un état sûr de zone éclairée ;
      - Alors l'état des projecteurs PJ est modifié : on ajuste le mode d'éclairage des projecteurs PJ en position code C_MOD ;
      - Sinon, l'état des projecteurs PJ est figé : on demeure en position route R_MOD.

On notera que l'on choisit au moins deux critères de vérité PARAM, ce qui correspond à choisir la majorité, pour avoir plus de fiabilité.

On notera qu'en ce qui concerne le test sur la vitesse VIT lorsqu'elle est supérieure à la première vitesse de référence VITref1, il y a une condition de plus (au niveau des deux critères PARAM) que les test sur la vitesse VIT lorsqu'elle est inférieure à la première vitesse de référence VITref1 car on considère que dans un environnement éclairé, tel qu'une ville par exemple, le véhicule doit rouler à basse vitesse. Ainsi, plus la vitesse VIT du véhicule est élevée, plus les conditions pour passer en position code C_MOD sont restrictives.

Ainsi, ce troisième mode de réalisation permet d'une part d'avoir une détection stable et indépendante de la caméra utilisée, grâce à la détection de lampadaires, et d'autre part d'avoir une détection plus fiable dans le cas où la détection de lampadaires serait défectueuse (lampadaire abîmé, trop haut etc.) grâce à la détection de zones éclairées de nuit.

Dans un mode de réalisation non limitatif, la condition concernant le nombre d'objets validés est paramétrable. On peut décider de modifier l'état des projecteurs si un seul objet a été validé, ou au moins deux objets ont été validés etc.

On notera que la détection de zones éclairées de nuit dépend des caractéristiques de la caméra (résolution, dynamique, temps d'intégration) et donc selon la caméra utilisée, il peut y avoir peu de différence entre des zones éclairées ou non dans l'image, l'image peut donc être très sombre et ne pas comporter beaucoup de détails ce qui peut rendre difficile la détection de zones éclairées de nuit (selon les trois paramètres amplitude de la luminosité, niveau de détail, répartition de la luminosité, vu précédemment), d'où l'intérêt d'avoir la combinaison détection de lampadaires avec la détection de zones éclairées de nuit vu précédemment dans le troisième mode de réalisation.

On notera enfin que pour les trois modes de réalisation d'ajustement de l'éclairage des projecteurs décrits ci-dessus, on peut également envisager, dans une autre variante de réalisation non limitative, de ne pas inclure les tests sur les paramètres propres au véhicule.

Ainsi, le procédé décrit permet de déterminer si le véhicule circule dans un environnement éclairé ou non et d'ajuster en conséquence le mode d'éclairage de ses projecteurs.

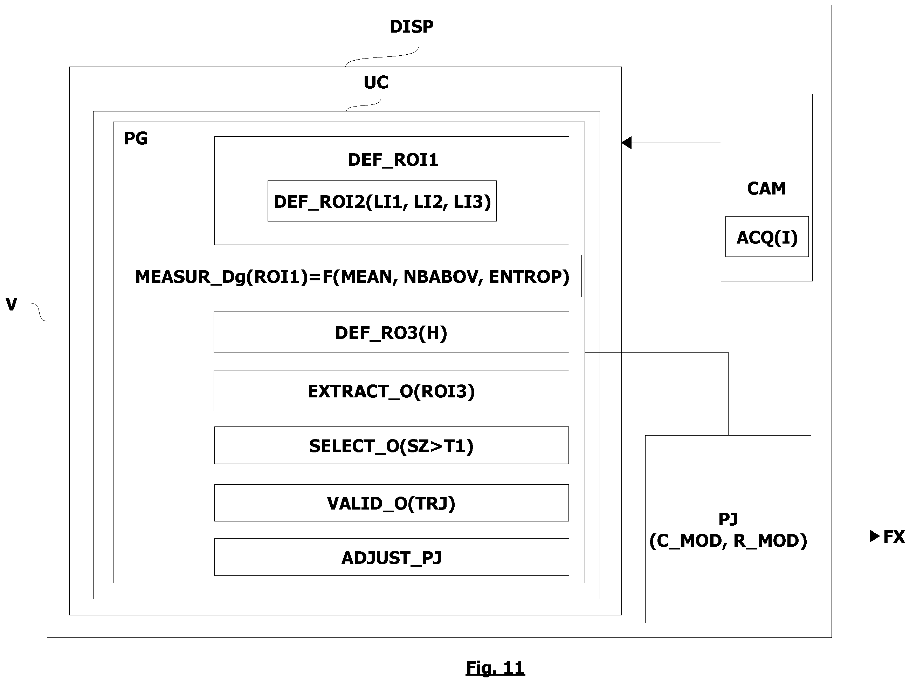

Le procédé de l'invention est mis en oeuvre par un dispositif de DISP d'ajustement de l'éclairage de projecteurs pour véhicule automobile, représenté à la Fig. 11.

Ce dispositif DISP est intégré dans le véhicule V.

Ce dispositif DISP comporte notamment une unité de contrôle UC pour :
- Déterminer des zones éclairées de nuit en :
   - Déterminant une première région d'intérêt ROI1 dans une image acquise I par une caméra vidéo CAM du véhicule V ; et
   - Mesurant un degré d'éclairement Dg dans la première région d'intérêt déterminée ROI1 ;
- Et déterminer le mode d'éclairage des projecteurs PJ du véhicule automobile en fonction du degré d'éclairement Dg.

Dans un mode de réalisation non limitatif, l'unité de contrôle UC permet en outre de détecter des objets éclairants en :
- Déterminant une troisième région d'intérêt ROI3 dans une image acquise I par une caméra vidéo CAM du véhicule V ;
- Effectuant une extraction des objets O dans ladite troisième région d'intérêt ROI3, un objet extrait OE correspondant à une pluralité de pixels PX successifs ayant une valeur supérieure à un premier niveau de gris G1 ;
- Sélectionnant les objets extraits OE qui ont une taille supérieure à une taille déterminée T1.

Dans un exemple non limitatif, le véhicule comporte une caméra CAM qui acquière 10 images par seconde et est par exemple du type VGA de définition 640*480 et comporte une lentille (non représentée) à cet effet. Dans un mode de réalisation non limitatif, la résolution de la caméra est de 10 bits ou 12 bits, soit respectivement de 1024 ou 4096 niveaux de gris possibles pour une valeur de pixel PX.

On notera que l'on peut également utiliser une caméra 8 bits, mais elle aura moins de dynamique.

Dans un mode de réalisation non limitatif, le dispositif d'ajustement DISP peut en outre comporter la caméra vidéo CAM permettant d'acquérir une image I. On notera que dans ce cas, l'unité de traitement d'images TR peut également se trouver dans la caméra CAM ou faire partie de l'unité de contrôle UC également tel qu'illustré sur la Fig. 11.

On notera que la mise en oeuvre du procédé d'ajustement exposé ci-dessus peut être effectuée au moyen d'un dispositif micro programmé « software », d'une logique câblée et/ou de composants électroniques « hardware ».

Ainsi, le dispositif d'ajustement DISP peut comporter un produit programme d'ordinateur PG comportant une ou plusieurs séquences d'instructions exécutables par une unité de traitement d'information telle qu'un microprocesseur, ou d'une unité de traitement d'un microcontrôleur, d'un ASIC, d'un ordinateur etc., l'exécution desdites séquences d'instructions permettant une mise en oeuvre du procédé décrit.

Un tel programme d'ordinateur PG peut être inscrit en mémoire non volatile inscriptible de type ROM ou en mémoire non volatile réinscriptible de type EEPROM ou FLASH. Ledit programme d'ordinateur PG peut être inscrit en mémoire en usine ou encore chargé en mémoire ou téléchargé à distance en mémoire. Les séquences d'instructions peuvent être des séquences d'instructions machine, ou encore des séquences d'un langage de commande interprétées par l'unité de traitement au moment de leur exécution.

Dans l'exemple non limitatif de la Fig. 11, le programme d'ordinateur PG est inscrit dans une mémoire de l'unité de contrôle UC du dispositif DISP.

Bien entendu, la description du procédé n'est pas limitée aux modes de réalisation et exemples décrits ci-dessus.

Ainsi, dans un mode de réalisation non limitatif, lors de la détection de lampadaires, on peut utiliser un compteur CPT qui compte le nombre de lampadaires extraits afin d'ajouter un test lors de la permutation du mode d'éclairage des projecteurs du mode route au mode code. Ainsi, dans un exemple non limitatif, au bout d'un lampadaire rencontré (extrait, sélectionné et validé), on peut décider d'allumer les projecteurs en position code, ou au bout de deux uniquement. Ce dernier test avec deux lampadaires permet d'éviter de se positionner en mode code lorsque l'on rencontre par exemple une maison isolée avec un lampadaire unique sur une route de campagne.

Par ailleurs, dans un mode de réalisation non limitatif, on peut très bien commencer par une détection de lampadaires avant la détection de de zones éclairées de nuit.

Ainsi, l'invention présente notamment les avantages suivants :
- Elle évite d'avoir une solution uniquement basée sur la vitesse du véhicule, cette dernière solution ne prenant pas en compte la réalité de l'environnement du véhicule ;
- Elle permet de détecter à la fois l'éclairage public de nuit de la route sur laquelle circule le véhicule, et les zones éclairées par cet éclairage public au moyen respectivement de l'extraction d'objets, et de la mesure du degré d'éclairement ;
- Elle permet d'avoir une détection fiable et stable grâce à la détection de lampadaires et ce quelques soient les caractéristiques de la caméra utilisée. En effet, les sources lumineuses des lampadaires sont assez puissantes pour être toujours visibles dans une image acquise par la caméra ;
- Elle permet de fiabiliser la détection de l'éclairage de nuit tel que des lampadaires grâce à la validation de la trajectoire des objets sélectionnés dans une image et pouvant être représentatif de lampadaires ;
- Elle permet grâce à la détection de zones éclairées de nuit de reconnaître plus sûrement si le véhicule se trouve dans un environnement éclairé ou non; et en particulier dans les cas suivants :
   - lorsque les lampadaires sont placés trop haut et sont donc peut-être hors du champ de la caméra ;
   - lorsque la route est étroite, les lampadaires peuvent être également hors du champ de la caméra ;
   - lorsqu'un ou plusieurs lampadaires ne fonctionnent pas ;
   - lorsque la source lumineuse des lampadaires est cachée par des obstacles tels que des arbres (la détection des lampadaires selon les étapes de détection décrites ci-dessus est plus difficile) ;
- Elle permet d'éviter de prendre en compte la zone éclairée par le faisceau lumineux des projecteurs du véhicule, dans la détection des zones éclairées de nuit grâce à la suppression de la deuxième région d'intérêt ;
- Elle permet de filtrer les fluctuations de la valeur moyenne des pixels, de l'entropie et du nombre de pixels au dessus d'un niveau de référence, grâce au calcul desdites caractéristiques qui s'effectue sur une séquence d'image ;
- Elle permet un ajustement du mode d'éclairage des projecteurs de façon plus rapide, grâce aux deux seuils supplémentaires S2, S3 ; S2', S3' ; S2", S3" utilisés pour chacun des paramètres de la mesure du degré d'éclairement ;
- Elle permet d'éviter des transitions intempestives entre le mode position route R_MOD et le mode position code C_MOD des projecteurs grâce à la temporisation mise en place au moyen des trois seuil S1, S2 et S3 associés à chacun des paramètres de la mesure du degré d'éclairement ; on a ainsi une meilleure stabilité dans la gestion de l'ajustement du mode d'éclairage des projecteurs du véhicule ; et
- Elle permet une meilleure réactivité pour l'ajustement du mode d'éclairage des projecteurs du véhicule lorsque le véhicule entre ou sort d'un environnement éclairé que dans le cas d'une solution qui n'utiliserait que la vitesse du véhicule ou d'une solution qui utiliserait des capteurs RLT (« Rain Light Tunel ») activant les projecteurs en position route. En effet, dans le cas de la première solution, la réactivité n'est pas bonne si l'on roule vite dans un environnement éclairé par exemple ou si l'on roule lentement dans un environnement non éclairé. Il peut y avoir des erreurs. Dans le cas de la deuxième solution, il est connu de l'homme du métier que les capteurs RLT ont un temps de latence important pour activer les projecteurs en position route par exemple.

## Revendications

1. Procédé d'ajustement de l'éclairage de projecteurs pour véhicule automobile, comportant :
- une étape de déterminer des zones éclairées de nuit par des objets éclairants dans laquelle :
- On détermine une première région d'intérêt (ROI1) dans une image acquise (I) par une caméra vidéo (CAM) du véhicule (V) ; et
- On mesure un degré d'éclairement (Dg) dans ladite première région d'intérêt (ROI1) ;
- et une étape de détermination du mode d'éclairage des projecteurs (PJ) du véhicule automobile en fonction du degré d'éclairement (Dg) selon lequel la mesure du degré d'éclairement (Dg) s'effectue selon un critère d'amplitude de luminosité dans la première région d'intérêt (ROI1), ladite amplitude se calculant en fonction de la valeur moyenne (MEAN) de la valeur des pixels (PX) de la première région d'intérêt (ROI1)
et/ou
un critère de niveau de détail des informations contenues dans la première région d'intérêt (ROI1), ledit niveau de détail étant calculé en fonction de l'entropie (ENTROP) de la première région d'intérêt (ROI1) et/ou
un critère de répartition de luminosité dans la première région d'intérêt (ROI1), ladite répartition se calculant en fonction d'un nombre de pixels (NBABOV) dans la première région d'intérêt (ROI1) dont la valeur est supérieure à un niveau de référence (REF)
selon lequel à chaque critère est associé :
- un premier seuil (S1, S1', S1") qui permet de déterminer si le véhicule se trouve dans une zone éclairée ou non ;
- un deuxième seuil (S2, S2', S2") qui permet de déterminer si le véhicule se trouve de façon certaine dans une zone éclairée ; et
- un troisième seuil (S3, S3', S3") qui permet de déterminer si le véhicule se trouve de façon certaine dans une zone non éclairée et
selon lequel à chaque seuil (S1, S1', S1" ; S2, S2', S2" ; S3, S3', S3") est associé respectivement un compteur (CT1, CT1', CT1" ; CT2, CT2', CT2"; CT3, CT3', CT3") qui permet de déterminer un nombre de fois où ledit seuil associé est atteint sur une séquence d'images (SQ).

2. Procédé d'ajustement selon la revendication 1, selon lequel la détermination des zones éclairées comporte en outre une étape supplémentaire de supprimer de la première région d'intérêt (ROI1) une deuxième région d'intérêt (ROI2) représentative d'une zone éclairée par un faisceau lumineux (FX) des projecteurs (PJ) du véhicule (V).

3. Procédé d'ajustement selon l'une des revendications précédentes, selon lequel à chaque compteur (CT1, CT1', CT1" ; CT2, CT2', CT2"; CT3, CT3', CT3") est associé respectivement un critère de vérité (PARAM1, PARAM1', PARAM1"; PARAM2, PARAM2', PARAM2" ; PARAM3, PARAM3', PARAM3") qui est marqué vrai lorsque le compteur associé atteint un nombre de temporisation donné (NB_CT).

4. Procédé d'ajustement selon la revendication 3, selon lequel la mesure du degré d'éclairement (Dg) s'effectue selon plusieurs critères choisis parmi les critères suivant : un critère de niveau de détail des informations contenues dans la première région d'intérêt (ROI1), ledit niveau de détail étant calculé en fonction de l'entropie (ENTROP) de la première région d'intérêt (ROI1), un critère d'amplitude de luminosité dans la première région d'intérêt (ROI1), ladite amplitude se calculant en fonction de la valeur moyenne (MEAN) de la valeur des pixels (PX) de la première région d'intérêt (ROI1), un critère de répartition de luminosité dans la première région d'intérêt (ROI1), ladite répartition se calculant en fonction d'un nombre de pixels (NBABOV) dans la première région d'intérêt (ROI1) dont la valeur est supérieure à un niveau de référence (REF) ;
et selon lequel lorsque l'état des projecteurs (PJ) du véhicule (V) est initialement en position code :
- Si au moins deux critères de vérité (PARAM) associés d'une part à deux critères selon lesquels la mesure de degrés d'éclairement est effectuée et d'autre part correspondant à un état probable de zone éclairée ou à un état sûr de zone éclairée sont marqués vrais;
- Ou si le véhicule comporte un angle au volant (α) supérieur à un angle de référence (αref) ;
- Ou si la vitesse du véhicule (VIT) est inférieure à une première vitesse de référence (VITref1) et aucun des critères de vérité (PARAM) associés d'une part à deux critères selon lesquels la mesure de degrés d'éclairement est effectuée et correspondant d'autre part à un état sûr de zone non éclairée ne sont marqués vrais ;
- Ou si la vitesse du véhicule (VIT) est inférieure à une deuxième vitesse de référence (VITref2) ;
- Alors le mode d'éclairage des projecteurs (PJ) demeure en position code ;
- Sinon, le mode d'éclairage des projecteurs (PJ) est ajusté en position route.

5. Procédé d'ajustement selon la revendication 3, selon lequel la mesure du degré d'éclairement (Dg) s'effectue selon plusieurs critères choisis parmi les critères suivant : un critère de niveau de détail des informations contenues dans la première région d'intérêt (ROI1), ledit niveau de détail étant calculé en fonction de l'entropie (ENTROP) de la première région d'intérêt (ROI1), un critère d'amplitude de luminosité dans la première région d'intérêt (ROI1), ladite amplitude se calculant en fonction de la valeur moyenne (MEAN) de la valeur des pixels (PX) de la première région d'intérêt (ROI1), un critère de répartition de luminosité dans la première région d'intérêt (ROI1), ladite répartition se calculant en fonction d'un nombre de pixels (NBABOV) dans la première région d'intérêt (ROI1) dont la valeur est supérieure à un niveau de référence (REF) ;
et selon lequel lorsque l'état des projecteurs (PJ) du véhicule (V) est initialement en position route :
- Si la vitesse du véhicule (VIT) est supérieure à une première vitesse de référence (VITref1) ;
- Si au moins deux critères de vérité (PARAM) associés d'une part à deux critères selon lesquels la mesure de degrés d'éclairement est effectuée et correspondant d'autre part à un état sûr de zone éclairée sont marqués vrais;
- Alors le mode d'éclairage des projecteurs (PJ) est ajusté en position code ;
- Si la vitesse du véhicule (VIT) est inférieure à la première vitesse de référence (VITref1) ;
- Si au moins deux critères de vérité (PARAM) associés d'une part à deux critères selon lesquels la mesure de degrés d'éclairement est effectuée et correspondant d'autre part à un état probable de zone éclairée ou à un état sûr de zone éclairée sont marqués vrais;
- Alors le mode d'éclairage des projecteurs (PJ) est ajusté en position code ;
- Sinon, le mode d'éclairage des projecteurs (PJ) demeure en position route.

6. Procédé d'ajustement selon l'une des revendications précédentes, selon lequel il comporte en outre une étape supplémentaire de détection d'objets éclairants comportant les sous-étapes de :
- Déterminer une troisième région d'intérêt (ROI3) dans une image acquise (I) par une caméra vidéo (CAM) du véhicule (V) ;
- Extraire des objets (O) dans ladite troisième région d'intérêt (ROI3), un objet extrait (OE) correspondant à une pluralité de pixels (PX) successifs ayant une valeur supérieure à un premier niveau de gris (G1) ;
- Sélectionner les objets extraits (OE) qui ont une taille (SZ) supérieure à une taille déterminée (T1) ;

7. Procédé d'ajustement selon la revendication précédente, selon lequel la troisième région d'intérêt (ROI3) se situe au dessus de l'horizon (H) dans l'image acquise (I).

8. Procédé d'ajustement selon l'une des revendications précédentes 6 ou 7, selon lequel il comporte en outre une étape supplémentaire de :
- Valider la sélection d'un objet (O) en fonction de sa trajectoire (TRJ) déterminée dans une séquence d'images (SQ).

9. Procédé d'ajustement selon la revendication précédente, selon lequel la validation d'un objet sélectionné (OS) s'effectue en outre en fonction du nombre de fois où il apparaît dans une séquence d'images (SQ).

10. Procédé d'ajustement selon l'une des revendications précédentes 8 ou 9, selon lequel une temporisation (TP) est déclenchée à la suite d'une validation.

11. Procédé d'ajustement selon l'une des revendications précédentes 6 à 10 prise en combinaison avec la revendication 8, selon lequel la détermination du mode d'éclairage des projecteurs s'effectue en outre selon des objets validés, lesdits objets validés correspondant à des objets éclairants (OC).

12. Procédé d'ajustement selon l'une des revendications précédentes 6 à 11 pris en combinaison avec la revendication 3 et la revendication 8, selon lequel la mesure du degré d'éclairement (Dg) s'effectue selon plusieurs critères choisis parmi les critères suivant : un critère de niveau de détail des informations contenues dans la première région d'intérêt (ROI1), ledit niveau de détail étant calculé en fonction de l'entropie (ENTROP) de la première région d'intérêt (ROI1), un critère d'amplitude de luminosité dans la première région d'intérêt (ROI1), ladite amplitude se calculant en fonction de la valeur moyenne (MEAN) de la valeur des pixels (PX) de la première région d'intérêt (ROI1), un critère de répartition de luminosité dans la première région d'intérêt (ROI1), ladite répartition se calculant en fonction d'un nombre de pixels (NBABOV) dans la première région d'intérêt (ROI1) dont la valeur est supérieure à un niveau de référence (REF) ;
et selon lequel lorsque l'état des projecteurs (PJ) du véhicule (V) est initialement en position code :
- Si au moins un objet a été validé ;
- Ou, si au moins deux critères de vérité (PARAM) associés d'une part à deux critères selon lesquels la mesure de degrés d'éclairement est effectuée et correspondant d'autre part à un état probable de zone éclairée ou à un état sûr de zone éclairée sont marqués vrais;
- Ou si le véhicule comporte un angle au volant (α) supérieur à un angle de référence (αref) ;
- Ou si la vitesse du véhicule (VIT) est inférieure à une première vitesse de référence (VITref1) et aucun des critères de vérité (PARAM) associés d'une part à deux critères selon lesquels la mesure de degrés d'éclairement est effectuée et correspondant d'autre part à un état sûr de zone non éclairée ne sont marqués vrais ;
- OU si la vitesse du véhicule (VIT) est inférieure à une deuxième vitesse de référence (VITref2) ;
- Alors le mode d'éclairage des projecteurs (PJ) demeure en position code ;
- Sinon, le mode d'éclairage des projecteurs (PJ) est ajusté en position route.

13. Procédé d'ajustement selon l'une des revendications précédentes 6 à 12 pris en combinaison avec la revendication 3 et la revendication 8, selon lequel la mesure du degré d'éclairement (Dg) s'effectue selon plusieurs critères choisis parmi les critères suivant : un critère de niveau de détail des informations contenues dans la première région d'intérêt (ROI1), ledit niveau de détail étant calculé en fonction de l'entropie (ENTROP) de la première région d'intérêt (ROI1), un critère d'amplitude de luminosité dans la première région d'intérêt (ROI1), ladite amplitude se calculant en fonction de la valeur moyenne (MEAN) de la valeur des pixels (PX) de la première région d'intérêt (ROI1), un critère de répartition de luminosité dans la première région d'intérêt (ROI1), ladite répartition se calculant en fonction d'un nombre de pixels (NBABOV) dans la première région d'intérêt (ROI1) dont la valeur est supérieure à un niveau de référence (REF) ;
et selon lequel lorsque l'état des projecteurs (PJ) du véhicule (V) est initialement en position route :
- Si la vitesse du véhicule (VIT) est supérieure à une première vitesse de référence (VITref1) ;
- Si au moins un objet a été validé ;
- Ou si au moins deux critères de vérité (PARAM) associés d'une part à deux critères selon lesquels la mesure de degrés d'éclairement est effectuée et correspondant d'autre part à un état sûr de zone éclairée sont marqués vrais;
- Alors le mode d'éclairage des projecteurs (PJ) est ajusté en position code ;
- Si la vitesse du véhicule (VIT) est inférieure à la première vitesse de référence (VITref1) ;
- Si au moins un objet a été validé ;
- Ou si au moins deux critères de vérité (PARAM) associés d'une part à deux critères selon lesquels la mesure de degrés d'éclairement est effectuée et correspondant d'autre part à un état probable de zone éclairée ou à un état sûr de zone éclairée sont marqués vrais;
- Alors le mode d'éclairage des projecteurs (PJ) est ajusté en position code ;
- Sinon, le mode d'éclairage des projecteurs (PJ) demeure en position route.

14. Dispositif (DISP) d'ajustement de l'éclairage de projecteurs comportant des moyens pour mettre en oeuvre un procédé selon l'une quelconque des revendications 1 à 13.

## Patentansprüche

1. Regulierungsverfahren der Leuchtstärke von Kraftfahrzeugscheinwerfern, umfassend:
- einen Schritt des Bestimmens der Bereiche, die nachts von beleuchtenden Objekten beleuchtet werden, wobei:
- ein erstes Interessensgebiet (ROI1) in einem Bild (I) bestimmt wird, das von einer Videokamera (CAM) des Fahrzeugs (V) erfasst wurde; und
- ein Beleuchtungsgrad (Dg) in dem ersten Interessensgebiet (ROI1) gemessen wird;
- und einen Schritt des Bestimmens des Beleuchtungsmodus der Scheinwerfer (PJ) des Kraftfahrzeugs in Abhängigkeit von dem Beleuchtungsgrad (Dg), bei dem die Messung des Beleuchtungsgrads (Dg) nach einem Kriterium einer Helligkeitsamplitude in dem ersten Interessensgebiet (ROI1) erfolgt, wobei die Amplitude in Abhängigkeit von dem Mittelwert (MEAN) des Werts der Pixel (PX) des ersten Interessensgebiets (ROI1) berechnet wird
und/oder
ein Kriterium des Detaillierungsgrads der Informationen, die in dem ersten Interessensgebiet (ROI1) enthalten sind, wobei der Detaillierungsgrad in Abhängigkeit von der Entropie (ENTROP) des ersten Interessensgebiets (ROI1) berechnet wird und/oder ein Kriterium einer Helligkeitsverteilung in dem ersten Interessensgebiet (ROI1), wobei die Verteilung in Abhängigkeit von einer Anzahl von Pixeln (NBABOV) in dem ersten Interessensgebiet (ROI1), deren Wert größer als ein Referenzniveau (REF) ist, berechnet wird bei dem mit jedem Kriterium Folgendes assoziiert wird:
- eine erste Schwelle (S1, S1', S1"), die es erlaubt, zu bestimmen, ob sich das Fahrzeug in einem beleuchteten Bereich befindet oder nicht;
- eine zweite Schwelle (S2, S2', S2"), die es erlaubt, zu bestimmen, ob sich das Fahrzeug mit Sicherheit in einem beleuchteten Bereich befindet; und
- eine dritte Schwelle (S3, S3', S3"), die es erlaubt, zu bestimmen, ob sich das Fahrzeug mit Sicherheit in einem unbeleuchteten Bereich befindet und bei dem mit jeder Schwelle (S1, S1' S1"; S2, S2', S2"; S3, S3', S3") jeweils ein Zähler (CT1, CT1', CT1"; CT2, CT2', CT2"; CT3, CT3', CT3") assoziiert wird, der es erlaubt, eine Anzahl von Malen zu bestimmen, bei denen die assoziierte Schwelle bei einer Bildersequenz (SQ) erreicht wird.

2. Regulierungsverfahren nach Anspruch 1, wobei das Bestimmen der beleuchteten Bereiche ferner einen zusätzlichen Schritt des Löschens, aus dem ersten Interessensgebiet (ROI1), eines zweiten Interessensgebiets (ROI2), das einen Bereich darstellt, der von einem Lichtstrahl (FX) der Scheinwerfer (PJ) des Fahrzeugs (V) beleuchtet wird, umfasst.

3. Regulierungsverfahren nach einem der vorhergehenden Ansprüche, wobei mit jedem Zähler (CT1, CT1', CT1"; CT2, CT2', CT2"; CT3, CT3', CT3") jeweils ein Wahrheitskriterium (PARAM1, PARAM1', PARAM1"; PARAM2, PARAM2', PARAM2"; PARAM3, PARAM3', PARAM3") assoziiert wird, das als wahr markiert wird, wenn der assoziierte Zähler eine gegebene Verzögerungsanzahl (NB_CT) erreicht.

4. Regulierungsverfahren nach Anspruch 3, wobei die Messung des Beleuchtungsgrads (Dg) nach mehreren Kriterien erfolgt, die aus den folgenden Kriterien ausgewählt werden: einem Kriterium des Detaillierungsgrads der Informationen, die in dem ersten Interessensgebiet (ROI1) enthalten sind, wobei der Detaillierungsgrad in Abhängigkeit von der Entropie (ENTROP) des ersten Interessensgebiets (ROI1) berechnet wird, einem Kriterium einer Helligkeitsamplitude in dem ersten Interessensgebiet (ROI1), wobei die Amplitude in Abhängigkeit von dem Mittelwert (MEAN) des Werts der Pixel (PX) des ersten Interessensgebiets (ROI1) berechnet wird, einem Kriterium einer Helligkeitsverteilung in dem ersten Interessensgebiet (ROI1), wobei die Verteilung in Abhängigkeit von einer Anzahl von Pixeln (NBABOV) in dem ersten Interessensgebiet (ROI1), deren Wert größer als ein Referenzniveau (REF) ist, berechnet wird;
und wobei, wenn sich der Zustand der Scheinwerfer (PJ) des Fahrzeugs (V) anfangs in Code-Position befindet:
- wenn mindestens zwei Wahrheitskriterien (PARAM), die einerseits mit zwei Kriterien assoziiert sind, nach welchen die Messung von Beleuchtungsgraden ausgeführt wird, und andererseits einem wahrscheinlichen Zustand eines beleuchteten Bereichs oder einem sicheren Zustand eines beleuchteten Bereichs entsprechen, als wahr markiert sind;
- oder wenn das Fahrzeug einen Lenkradwinkel (α) umfasst, der größer als ein Referenzwinkel (αref) ist;
- oder wenn die Geschwindigkeit des Fahrzeugs (VIT) geringer als eine erste Referenzgeschwindigkeit (VITref1) ist und keins der Wahrheitskriterien (PARAM), die einerseits mit zwei Kriterien assoziiert sind, nach welchen die Messung von Beleuchtungsgraden ausgeführt wird, und andererseits einem sicheren Zustand eines unbeleuchteten Bereichs entsprechen, als wahr markiert ist;
- oder wenn die Geschwindigkeit des Fahrzeugs (VIT) geringer als eine zweite Referenzgeschwindigkeit (VITref2) ist;
- der Beleuchtungsmodus der Scheinwerfer (PJ) dann in Code-Position verbleibt;
- der Beleuchtungsmodus der Scheinwerfer (PJ) andernfalls in Straßen-Position reguliert wird.

5. Regulierungsverfahren nach Anspruch 3, wobei die Messung des Beleuchtungsgrads (Dg) nach mehreren Kriterien erfolgt, die aus den folgenden Kriterien ausgewählt werden: einem Kriterium des Detaillierungsgrads der Informationen, die in dem ersten Interessensgebiet (ROI1) enthalten sind, wobei der Detaillierungsgrad in Abhängigkeit von der Entropie (ENTROP) des ersten Interessensgebiets (ROI1) berechnet wird, einem Kriterium einer Helligkeitsamplitude in dem ersten Interessensgebiet (ROI1), wobei die Amplitude in Abhängigkeit von dem Mittelwert (MEAN) des Werts der Pixel (PX) des ersten Interessensgebiets (ROI1) berechnet wird, einem Kriterium einer Helligkeitsverteilung in dem ersten Interessensgebiet (ROI1), wobei die Verteilung in Abhängigkeit von einer Anzahl von Pixeln (NBABOV) in dem ersten Interessensgebiet (ROI1), deren Wert größer als ein Referenzniveau (REF) ist, berechnet wird;
und wobei, wenn sich der Zustand der Scheinwerfer (PJ) des Fahrzeugs (V) anfangs in Straßen-Position befindet:
- wenn die Geschwindigkeit des Fahrzeugs (VIT) höher als eine erste Referenzgeschwindigkeit (VITref1) ist;
- wenn mindestens zwei Wahrheitskriterien (PARAM), die einerseits mit zwei Kriterien assoziiert sind, nach welchen die Messung von Beleuchtungsgraden ausgeführt wird, und andererseits einem sicheren Zustand eines beleuchteten Bereichs entsprechen, als wahr markiert sind;
- der Beleuchtungsmodus der Scheinwerfer (PJ) dann in Code-Position reguliert wird;
- wenn die Geschwindigkeit des Fahrzeugs (VIT) geringer als die erste Referenzgeschwindigkeit (VITref1) ist;
- wenn mindestens zwei Wahrheitskriterien (PARAM), die einerseits mit zwei Kriterien assoziiert sind, nach welchen die Messung von Beleuchtungsgraden ausgeführt wird, und andererseits einem wahrscheinlichen Zustand eines beleuchteten Bereichs oder einem sicheren Zustand eines beleuchteten Bereichs entsprechen, als wahr markiert sind;
- der Beleuchtungsmodus der Scheinwerfer (PJ) dann in Code-Position reguliert wird;
- der Beleuchtungsmodus der Scheinwerfer (PJ) andernfalls in Straßen-Position verbleibt.

6. Regulierungsverfahren nach einem der vorhergehenden Ansprüche, wobei es ferner einen zusätzlichen Schritt des Erkennens von beleuchtenden Objekten umfasst, umfassend die Unterschritte des:
- Bestimmens eines dritten Interessensgebiets (ROI3) in einem Bild (I), das von einer Videokamera (CAM) des Fahrzeugs (V) erfasst wurde;
- Extrahieren von Objekten (0) aus dem dritten Interessensgebiet (ROI3), wobei ein extrahiertes Objekt (OE) mehreren aufeinanderfolgenden Pixeln (PX) entspricht, die einen Wert über einer ersten Graustufe (G1) aufweisen;
- Auswählen der extrahierten Objekte (OE), die eine Größe (SZ) über einer bestimmten Größe (T1) aufweisen.

7. Regulierungsverfahren nach dem vorhergehenden Anspruch, wobei sich das dritte Interessensgebiet (ROI3) über dem Horizont (H) in dem erfassten Bild (I) befindet.

8. Regulierungsverfahren nach einem der vorhergehenden Ansprüche 6 oder 7, ferner umfassend einen zusätzlichen Schritt des:
- Bestätigens der Auswahl eines Objekts (0) in Abhängigkeit von seiner Bahn (TRJ), die in einer Bildersequenz (SQ) bestimmt wurde.

9. Regulierungsverfahren nach dem vorhergehenden Anspruch, wobei das Bestätigen eines ausgewählten Objekts (OS) ferner in Abhängigkeit von der Anzahl von Malen, die es in einer Bildersequenz (SQ) erscheint, erfolgt.

10. Regulierungsverfahren nach einem der vorhergehenden Ansprüche 8 oder 9, wobei im Anschluss an eine Bestätigung eine Verzögerung (TP) ausgelöst wird.

11. Regulierungsverfahren nach einem der vorhergehenden Ansprüche 6 bis 10 in Kombination mit Anspruch 8, wobei das Bestimmen des Beleuchtungsmodus der Scheinwerfer ferner entsprechend bestätigten Objekten erfolgt, wobei die bestätigten Objekte beleuchtenden Objekten (OC) entsprechen.

12. Regulierungsverfahren nach einem der vorhergehenden Ansprüche 6 bis 11 in Kombination mit Anspruch 3 und Anspruch 8, wobei die Messung des Beleuchtungsgrads (Dg) nach mehreren Kriterien erfolgt, die aus den folgenden Kriterien ausgewählt werden: einem Kriterium des Detaillierungsgrads der Informationen, die in dem ersten Interessensgebiet (ROI1) enthalten sind, wobei der Detaillierungsgrad in Abhängigkeit von der Entropie (ENTROP) des ersten Interessensgebiets (ROI1) berechnet wird, einem Kriterium einer Helligkeitsamplitude in dem ersten Interessensgebiet (ROI1), wobei die Amplitude in Abhängigkeit von dem Mittelwert (MEAN) des Werts der Pixel (PX) des ersten Interessensgebiets (ROI1) berechnet wird, einem Kriterium einer Helligkeitsverteilung in dem ersten Interessensgebiet (ROI1), wobei die Verteilung in Abhängigkeit von einer Anzahl von Pixeln (NBABOV) in dem ersten Interessensgebiet (ROI1), deren Wert größer als ein Referenzniveau (REF) ist, berechnet wird;
und wobei, wenn sich der Zustand der Scheinwerfer (PJ) des Fahrzeugs (V) anfangs in Code-Position befindet:
- wenn mindestens ein Objekt bestätigt wurde;
- oder, wenn mindestens zwei Wahrheitskriterien (PARAM), die einerseits mit zwei Kriterien assoziiert sind, nach welchen die Messung von Beleuchtungsgraden ausgeführt wird, und andererseits einem wahrscheinlichen Zustand eines beleuchteten Bereichs oder einem sicheren Zustand eines beleuchteten Bereichs entsprechen, als wahr markiert sind;
- oder wenn das Fahrzeug einen Lenkradwinkel (α) umfasst, der größer als ein Referenzwinkel (aref) ist;
- oder wenn die Geschwindigkeit des Fahrzeugs (VIT) geringer als eine erste Referenzgeschwindigkeit (VITref1) ist und keins der Wahrheitskriterien (PARAM), die einerseits mit zwei Kriterien assoziiert sind, nach welchen die Messung von Beleuchtungsgraden ausgeführt wird, und andererseits einem sicheren Zustand eines unbeleuchteten Bereichs entsprechen, als wahr markiert ist;
- oder wenn die Geschwindigkeit des Fahrzeugs (VIT) geringer als eine zweite Referenzgeschwindigkeit (VITref2) ist;
- der Beleuchtungsmodus der Scheinwerfer (PJ) dann in Code-Position verbleibt;
- der Beleuchtungsmodus der Scheinwerfer (PJ) andernfalls in Straßen-Position reguliert wird.

13. Regulierungsverfahren nach einem der vorhergehenden Ansprüche 6 bis 12 in Kombination mit Anspruch 3 und Anspruch 8, wobei die Messung des Beleuchtungsgrads (Dg) nach mehreren Kriterien erfolgt, die aus den folgenden Kriterien ausgewählt werden: einem Kriterium des Detaillierungsgrads der Informationen, die in dem ersten Interessensgebiet (ROI1) enthalten sind, wobei der Detaillierungsgrad in Abhängigkeit von der Entropie (ENTROP) des ersten Interessensgebiets (ROI1) berechnet wird, einem Kriterium einer Helligkeitsamplitude in dem ersten Interessensgebiet (ROI1), wobei die Amplitude in Abhängigkeit von dem Mittelwert (MEAN) des Werts der Pixel (PX) des ersten Interessensgebiets (ROI1) berechnet wird, einem Kriterium einer Helligkeitsverteilung in dem ersten Interessensgebiet (ROI1), wobei die Verteilung in Abhängigkeit von einer Anzahl von Pixeln (NBABOV) in dem ersten Interessensgebiet (ROI1), deren Wert größer als ein Referenzniveau (REF) ist, berechnet wird;
und wobei, wenn sich der Zustand der Scheinwerfer (PJ) des Fahrzeugs (V) anfangs in Straßen-Position befindet:
- wenn die Geschwindigkeit des Fahrzeugs (VIT) höher als eine erste Referenzgeschwindigkeit (VITref1) ist;
- wenn mindestens ein Objekt bestätigt wurde;
- oder wenn mindestens zwei Wahrheitskriterien (PARAM), die einerseits mit zwei Kriterien assoziiert sind, nach welchen die Messung von Beleuchtungsgraden ausgeführt wird, und andererseits einem sicheren Zustand eines beleuchteten Bereichs entsprechen, als wahr markiert sind;
- der Beleuchtungsmodus der Scheinwerfer (PJ) dann in Code-Position reguliert wird;
- wenn die Geschwindigkeit des Fahrzeugs (VIT) geringer als die erste Referenzgeschwindigkeit (VITref1) ist;
- wenn mindestens ein Objekt bestätigt wurde;
- oder wenn mindestens zwei Wahrheitskriterien (PARAM), die einerseits mit zwei Kriterien assoziiert sind, nach welchen die Messung von Beleuchtungsgraden ausgeführt wird, und andererseits einem wahrscheinlichen Zustand eines beleuchteten Bereichs oder einem sicheren Zustand eines beleuchteten Bereichs entsprechen, als wahr markiert sind;
- der Beleuchtungsmodus der Scheinwerfer (PJ) dann in Code-Position reguliert wird;
- der Beleuchtungsmodus der Scheinwerfer (PJ) andernfalls in Straßen-Position verbleibt.

14. Vorrichtung (DISP) zur Regulierung der Leuchtstärke von Scheinwerfern, umfassend Mittel zum Umsetzen eines Verfahrens nach einem der Ansprüche 1 bis 13.

## Claims

1. Method for adjusting the illumination of headlights for a motor vehicle, including:
- a step of determining zones illuminated at night by illuminating objects, wherein:
- a first region of interest (ROI1) in an image (I) acquired by a video camera (CAM) of the vehicle (V) is determined; and
- a degree of illumination (Dg) in said first region of interest (ROI1) is measured;
- and a step of determining the illumination mode of the headlights (PJ) of the motor vehicle depending on the degree of illumination (Dg),
wherein the measurement of the degree of illumination (Dg) is performed in accordance with
a criterion of the brightness range in the first region of interest (ROI1), said range being calculated on the basis of the mean value (MEAN) of the value of the pixels (PX) of the first region of interest (ROI1)
and/or
a criterion of the level of detail of the information contained in the first region of interest (ROI1), said level of detail being calculated on the basis of the entropy (ENTROP) of the first region of interest (ROI1)
and/or
a criterion of the brightness distribution in the first region of interest (ROI1), said distribution being calculated on the basis of a number of pixels (NBABOV) in the first region of interest (ROI1) the value of which is greater than a reference level (REF) wherein there is associated, with each criterion:
- a first threshold (S1, S1', S1") that makes it possible to determine whether or not the vehicle is situated in an illuminated zone;
- a second threshold (S2, S2', S2") that makes it possible to determine whether the vehicle is definitely situated in an illuminated zone; and
- a third threshold (S3, S3', S3") that makes it possible to determine whether the vehicle is definitely situated in a non-illuminated zone, and
wherein there is associated, with each threshold (S1, S1', S1"; S2, S2', S2"; S3, S3', S3"), respectively one counter (CT1, CT1', CT1"; CT2, CT2', CT2"; CT3, CT3', CT3") that makes it possible to determine a number of times that said associated threshold is reached over a sequence of images (SQ).

2. Adjustment method according to Claim 1, wherein the determination of the illuminated zones furthermore includes an additional step of deleting, from the first region of interest (ROI1), a second region of interest (ROI2) representative of an zone illuminated by a light beam (FX) from the headlights (PJ) of the vehicle (V).

3. Adjustment method according to either of the preceding claims, wherein there is associated, with each counter (CT1, CT1', CT1"; CT2, CT2', CT2"; CT3, CT3', CT3"), respectively one truth criterion (PARAM1, PARAM1', PARAM1"; PARAM2, PARAM2', PARAM2"; PARAM3, PARAM3', PARAM3") that is labelled true when the associated counter reaches a given timeout number (NB_CT).

4. Adjustment method according to Claim 3, wherein the measurement of the degree of illumination (Dg) is performed in accordance with a plurality of criteria chosen from among the following criteria: a criterion of the level of detail of the information contained in the first region of interest (ROI1), said level of detail being calculated on the basis of the entropy (ENTROP) of the first region of interest (ROI1), a criterion of the brightness range in the first region of interest (ROI1), said range being calculated on the basis of the mean value (MEAN) of the value of the pixels (PX) of the first region of interest (ROI1), a criterion of the brightness distribution in the first region of interest (ROI1), said distribution being calculated on the basis of a number of pixels (NBABOV) in the first region of interest (ROI1) the value of which is greater than a reference level (REF);
and wherein, when the state of the headlights (PJ) of the vehicle (V) is initially in low-beam position:
- If at least two truth criteria (PARAM) associated firstly with two criteria according to which the measurement of degrees of illumination is performed and corresponding secondly to a probable illuminated zone state or to a definite illuminated zone state are labelled true;
- Or if the vehicle has a steering angle (α) greater than a reference angle (αref);
- Or if the speed of the vehicle (VIT) is lower than a first reference speed (VITref1) and none of the truth criteria (PARAM) associated firstly with two criteria according to which the measurement of degrees of illumination is performed and corresponding secondly to a definite non-illuminated zone state are labelled true;
- Or if the speed of the vehicle (VIT) is lower than a second reference speed (VITref2);
- Then the illumination mode of the headlights (PJ) remains in low-beam position;
- Otherwise the illumination mode of the headlights (PJ) is adjusted to high-beam position.

5. Adjustment method according to Claim 3, wherein the measurement of the degree of illumination (Dg) is performed in accordance with a plurality of criteria chosen from among the following criteria: a criterion of the level of detail of the information contained in the first region of interest (ROI1), said level of detail being calculated on the basis of the entropy (ENTROP) of the first region of interest (ROI1), a criterion of the brightness range in the first region of interest (ROI1), said range being calculated on the basis of the mean value (MEAN) of the value of the pixels (PX) of the first region of interest (ROI1), a criterion of the brightness distribution in the first region of interest (ROI1), said distribution being calculated on the basis of a number of pixels (NBABOV) in the first region of interest (ROI1) the value of which is greater than a reference level (REF);
and wherein, when the state of the headlights (PJ) of the vehicle (V) is initially in high-beam position:
- If the speed of the vehicle (VIT) is greater than a first reference speed (VITref1);
- If at least two truth criteria (PARAM) associated firstly with two criteria according to which the measurement of degrees of illumination is performed and corresponding secondly to a definite illuminated zone state are labelled true;
- Then the illumination mode of the headlights (PJ) is adjusted to low-beam position;
- If the speed of the vehicle (VIT) is lower than the first reference speed (VITref1);
- If at least two truth criteria (PARAM) associated firstly with two criteria according to which the measurement of degrees of illumination is performed and corresponding secondly to a probable illuminated zone state or to a definite illuminated zone state are labelled true;
- Then the illumination mode of the headlights (PJ) is adjusted to low-beam position;
- Otherwise the illumination mode of the headlights (PJ) remains in high-beam position.

6. Adjustment method according to one of the preceding claims, wherein it furthermore includes an additional step of detecting illuminating objects, including the sub-steps of:
- Determining a third region of interest (ROI3) in an image (I) acquired by a video camera (CAM) of the vehicle (V);
- Extracting objects (0) from said third region of interest (ROI3), an extracted object (OE) corresponding to a plurality of successive pixels (PX) having a value greater than a first grey level (G1);
- Selecting the extracted objects (OE) that have a size (SZ) greater than a determined size (T1).

7. Adjustment method according to the preceding claim, wherein the third region of interest (ROI3) is situated above the horizon (H) in the acquired image (I).

8. Adjustment method according to either of the preceding Claims 6 and 7, wherein it furthermore includes an additional step of:
- Validating the selection of an object (0) depending on its determined path (TRJ) in a sequence of images (SQ).

9. Adjustment method according to the preceding claim, wherein the validation of a selected object (OS) is furthermore performed depending on the number of times that it appears in a sequence of images (SQ).

10. Adjustment method according to either of the preceding Claims 8 and 9, wherein a timeout (TP) is triggered following a validation.

11. Adjustment method according to one of the preceding Claims 6 to 10 taken in combination with Claim 8, wherein the determination of the illumination mode of the headlights is furthermore performed depending on validated objects, said validated objects corresponding to illuminating objects (OC).

12. Adjustment method according to one of the preceding Claims 6 to 11 taken in combination with Claim 3 and Claim 8, wherein the measurement of the degree of illumination (Dg) is performed in accordance with a plurality of criteria chosen from among the following criteria: a criterion of the level of detail of the information contained in the first region of interest (ROI1), said level of detail being calculated on the basis of the entropy (ENTROP) of the first region of interest (ROI1), a criterion of the brightness range in the first region of interest (ROI1), said range being calculated on the basis of the mean value (MEAN) of the value of the pixels (PX) of the first region of interest (ROI1), a criterion of the brightness distribution in the first region of interest (ROI1), said distribution being calculated on the basis of a number of pixels (NBABOV) in the first region of interest (ROI1) the value of which is greater than a reference level (REF);
and wherein, when the state of the headlights (PJ) of the vehicle (V) is initially in low-beam position:
- If at least one object has been validated;
- Or if at least two truth criteria (PARAM) associated firstly with two criteria according to which the measurement of degrees of illumination is performed and corresponding secondly to a probable illuminated zone state or to a definite illuminated zone state are labelled true;
- Or if the vehicle has a steering angle (α) greater than a reference angle (αref);
- Or if the speed of the vehicle (VIT) is lower than a first reference speed (VITref1) and none of the truth criteria (PARAM) associated firstly with two criteria according to which the measurement of degrees of illumination is performed and corresponding secondly to a definite non-illuminated zone state are labelled true;
- Or if the speed of the vehicle (VIT) is lower than a second reference speed (VITref2);
- Then the illumination mode of the headlights (PJ) remains in low-beam position;
- Otherwise the illumination mode of the headlights (PJ) is adjusted to high-beam position.

13. Adjustment method according to one of the preceding Claims 6 to 12 taken in combination with Claim 3 and Claim 8, wherein the measurement of the degree of illumination (Dg) is performed in accordance with a plurality of criteria chosen from among the following criteria: a criterion of the level of detail of the information contained in the first region of interest (ROI1), said level of detail being calculated on the basis of the entropy (ENTROP) of the first region of interest (ROI1), a criterion of the brightness range in the first region of interest (ROI1), said range being calculated on the basis of the mean value (MEAN) of the value of the pixels (PX) of the first region of interest (ROI1), a criterion of the brightness distribution in the first region of interest (ROI1), said distribution being calculated on the basis of a number of pixels (NBABOV) in the first region of interest (ROI1) the value of which is greater than a reference level (REF);
and wherein, when the state of the headlights (PJ) of the vehicle (V) is initially in high-beam position:
- If the speed of the vehicle (VIT) is greater than a first reference speed (VITref1);
- If at least one object has been validated;
- Or if at least two truth criteria (PARAM) associated firstly with two criteria according to which the measurement of degrees of illumination is performed and corresponding secondly to a definite illuminated zone state are labelled true;
- Then the illumination mode of the headlights (PJ) is adjusted to low-beam position;
- If the speed of the vehicle (VIT) is lower than the first reference speed (VITref1);
- If at least one object has been validated;
- Or if at least two truth criteria (PARAM) associated firstly with two criteria according to which the measurement of degrees of illumination is performed and corresponding secondly to a probable illuminated zone state or to a definite illuminated zone state are labelled true;
- Then the illumination mode of the headlights (PJ) is adjusted to low-beam position;
- Otherwise the illumination mode of the headlights (PJ) remains in high-beam position.

14. Headlight illumination adjustment device (DISP) including means for implementing a method according to any one of Claims 1 to 13.
